(19) 

Europäisches
Patentamt
European
Patent Office
Office européen
des brevets

(11) **EP 4 518 525 A1**

(12) **EUROPEAN PATENT APPLICATION**
published in accordance with Art. 153(4) EPC

(43) Date of publication:
**05.03.2025  Bulletin 2025/10**

(21) Application number: **23796825.0**

(22) Date of filing: **27.04.2023**

(51) International Patent Classification (IPC):
*H04W 72/232* (2023.01)   *H04W 72/231* (2023.01)
*H04W 72/12* (2023.01)    *H04L 1/00* (2006.01)
*H04L 5/00* (2006.01)    *H04B 7/0413* (2017.01)

(52) Cooperative Patent Classification (CPC):
**H04B 7/0413; H04L 1/00; H04L 5/00; H04W 72/12;
H04W 72/231; H04W 72/232**

(86) International application number:
**PCT/KR2023/005757**

(87) International publication number:
**WO 2023/211183 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022  KR 20220052009
10.08.2022  KR 20220100228
16.02.2023  KR 20230021049**

(71) Applicant: **LG Electronics Inc.
Yeongdeungpo-gu
Seoul 07336 (KR)**

(72) Inventors:
• **KIM, Seonwook**
  Seoul 06772 (KR)
• **YANG, Suckchel**
  Seoul 06772 (KR)
• **KANG, Jiwon**
  Seoul 06772 (KR)
• **GO, Seongwon**
  Seoul 06772 (KR)

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING/RECEIVING SIGNAL IN WIRELESS COMMUNICATION SYSTEM**

(57)    A method and a device for monitoring a signal in a wireless communication system, disclosed in the present specification, comprise receiving DCI for scheduling of PDSCHs or PUSCHs on different cells. Particularly, the DCI includes one or more DCI fields for the PDSCHs or the PUSCHs on different cells.

【Fig. 6】

Receive DCI for scheduling PUSCHs
on different cells — S601

Transmit PUSCHs on different cells
based on DCI — S603

EP 4 518 525 A1

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**Technical Problem**

The object of the present disclosure is to provide a signal transmission and reception method for efficiently transmitting and receiving control and data signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solution**

The present disclosure provides a method and apparatus for transmitting and receiving a signal in a wireless communication system.

In an aspect of the present disclosure, a method for receiving a signal by a user equipment (UE) in a wireless communication system includes receiving downlink control information (DCI) for scheduling physical downlink shared channels (PUSCHs) on different cells, and receiving PDSCHs on the different cells based on the DCI, wherein the DCI includes one transmission configuration indication (TCI) field for cells belonging to the same group from among the different cells, and one codepoint of the TCI field is mapped to a number of TCI states equal to the number of cells belonging to the group.

In an aspect of the present disclosure, a method of transmitting a signal by a base station (BS) in a wireless communication system includes transmitting downlink control information (DCI) for scheduling physical downlink shared channels (PDSCHs) on different cells, and transmitting PDSCHs on the different cells based on the DCI; wherein the DCI includes one transmission configuration indication (TCI) field for cells belonging to the same group among the different cells, and one codepoint of the TCI field is mapped to a number of TCI states equal to the number of cells belonging to the group.

In another aspect of the present disclosure, a method of transmitting a signal by a user equipment (UE) in a wireless communication system includes receiving downlink control information (DCI) for scheduling physical downlink shared channels (PUSCHs) on different cells, and transmitting the PUSCHs on the different cells based on the DCI, wherein the DCI includes a field of precoding information and number of layers for first cells belonging to a first group from among the different cells, each PUSCH of the first cells is transmitted based on a transmit precoding matrix indicator (TPMI) for each of the first cells, and the TPMI for each of the first cells is determined based on the field of the precoding information and number of layers, one field of second precoding information and number of layers for each of the first cells is configured for DCI for scheduling a PUSCH within one cell, and bits in the field of the precoding information and number of layers are determined based on a maximum value from among the bits in the configured field of the second precoding information and number of layers.

In an aspect of the present disclosure, a method for transmitting a signal by a base station (BS) in a wireless communication system includes receiving downlink control information (DCI) for scheduling physical downlink shared channels (PUSCHs) on different cells, and transmitting the PUSCHs on the different cells based on the DCI, wherein the DCI includes one field of precoding information and number of layers for first cells belonging to a first group from among the different cells, each PUSCH of the first cells is transmitted based on a transmit precoding matrix indicator (TPMI) for each of the first cells, the TPMI for each of the first cells is determined based on the field of the precoding information and number of layers, and one field of second precoding information and number of layers per the first cells is configured for the DCI for scheduling of the PUSCH in one cell, and bits of the field of the precoding information and number of layers is determined based on a maximum value from among the bits of the configured field of the second precoding information and number of layers.

In another aspect of the present disclosure, an apparatus, a processor and a storage medium for performing the signal receiving method are provided. In addition, in another aspect of the present disclosure, an apparatus, a processor and a storage medium for performing the signal transmitting method are provided.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

**Advantageous Effects**

According to one embodiment of the present disclosure, when control and data signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates a radio frame structure.
FIG. 2 illustrates a resource grid during the duration of a slot.
FIG. 3 illustrates a self-contained slot structure.
FIGS. 4 to 7 are diagrams illustrating methods for transmitting and receiving a signal according to the embodiments of the present disclosure.
FIGS. 8 to 11 illustrate devices according to an embodiment of the present disclosure.

**DETAILED DESCRIPTION**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3 GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

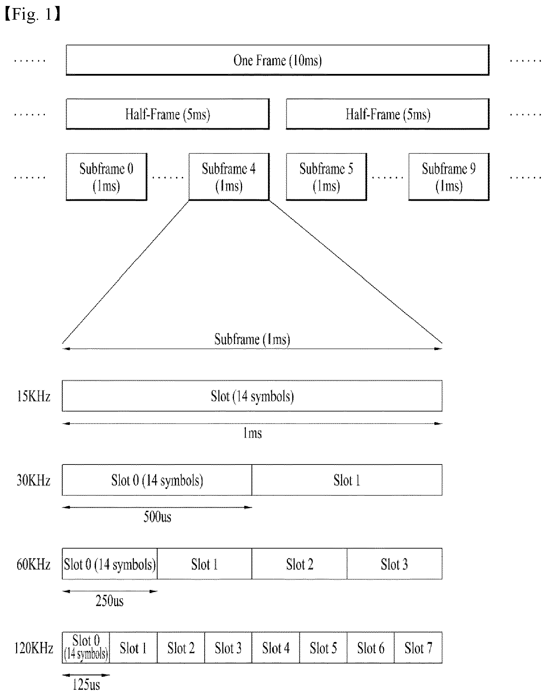

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 1.5KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subfame,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

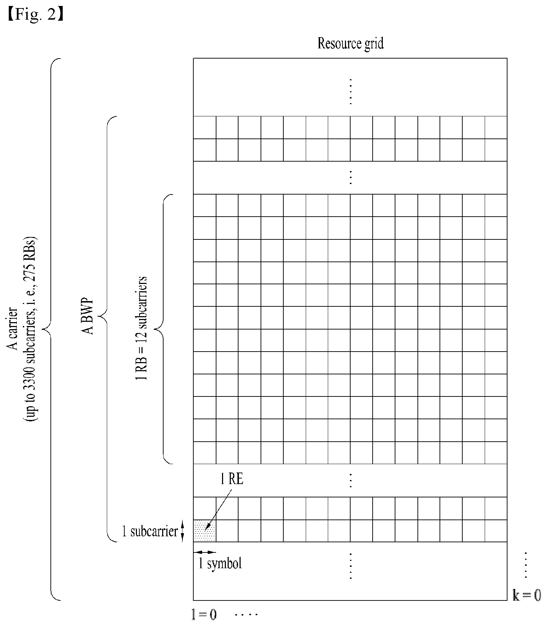

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

In the present disclosure, a base station (BS) may be, for example, a gNode B (gNB).

## DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In a carrier aggregation (CA) situation in which a plurality of cells are configured, a multi-cell scheduling (multi-CC scheduling) method that simultaneously schedules a plurality of serving cells/CCs through a single DCI (based on the justification as in Table 4) may be considered to reduce DCI overhead required for PDSCH/PUSCH scheduling. In the present disclosure, the expression 'scheduling a plurality of cells' may be understood as 'scheduling a PDSCH or PUSCH to be transmitted in each of the plurality of cells'. In other words, multi-cell DCI is DCI for scheduling PDSCHs or PUSCHs on multiple different cells.

Table 4 shows justification for supporting DCI for this purpose, and may be understood as one of the motivations for introducing such DCI (PDCCH).

[Table 4]

| |
|---|
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |

(continued)

One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account.

In this regard, a discussion called 'multi-carrier enhancement' is underway, which is to specify a method of scheduling PUSCHs or PDSCHs on multiple serving cells through a single DCI.

The present disclosure proposes a scheduling method using a DCI field with a changed structure compared to a conventional DCI field to more efficiently perform an operation of scheduling PUSCHs or PDSCHs on multiple serving cells through a single DCI. In more detail, more efficient scheduling methods are proposed by changing DCI fields related to multiple-input and multiple-output (MIMO).

In the present disclosure, a DCI that simultaneously schedules PUSCHs (or PDSCHs) on (one or) multiple serving cells is referred to as 'm-CC DCI or multi-cell DCI'. A DCI that has a conventional DCI format and schedules PUSCHs (or PDSCHs) on a single serving cell is referred to as 's-CC DCI or single-cell DCI'. m-CC DCI may be distinguished from the existing s-CC DCI through the DCI format, RNTI, or indicator field within the DCI.

PUSCH (or PDSCH) for different numbers/combinations of serving cells may be scheduled through one m-CC DCI. For example, only serving cell #1 may be scheduled via m-CC DCI, serving cell #1/2 may be scheduled, or serving cell #1/2/3 may be scheduled. These numbers/combinations may be distinguished by specific fields in the DCI or by RNTI.

A case in which only PUSCH (or PDSCH) on one cell is scheduled through m-CC DCI may be referred to as an 's-CC scheduling case'. A case in which PUSCHs (or PDSCHs) on multiple cells are scheduled may be referred to as an 'm-CC scheduling case'.

Even for one UE, channel conditions for respective cells may be different from each other, and thus the number of (MIMO transmission) layers to be applied to each PDSCH or PUSCH may vary. However, to provide maximum flexibility, when all DCI fields indicating information for each cell are included in the DCI, a payload size of the m-CC DCI may increase significantly. In particular, a compact DCI field configuration may be required to simultaneously schedule three or more cells. Therefore, configuration methods for the following fields (to reduce the DCI payload size) related to MIMO operation from among the fields included in m-CC DCI are proposed.

- SRS resource indication related fields (e.g., 'SRS resource set indicator' field, 'SRS resource indicator' field, or 'Second SRS resource indicator' field)
- Fields related to TPMI and layer numbers settings (e.g., 'Precoding information and number of layers' field or 'Second Precoding information' field)
- 'Transmission configuration indication' field

Multiple CCs that are simultaneously scheduled via m-CC DCI (or multiple CCs to be scheduled via m-CC DCI) are defined as co-scheduled CCs. The corresponding co-scheduled CCs (and CCs belonging thereto) may be grouped into one or more sub-groups. Separate fields may be configured for each sub-group. CCs belong within each sub-group may be preconfigured by higher layer signaling. Each field (a value indicated therethrough) may be commonly applied to CC(s) belonging to a sub-group. A sub-group may be referred to as a shared CC group. A method of commonly applying a DCI field to corresponding CCs belonging to the shared CC group when the attributes of the CCs are different is proposed.

Table 5 shows that each field constituting m-CC DCI (i.e., DCI format 0_X/1_X) is classified into three types. DCI format 0_X is a DCI format for scheduling PUSCHs on multiple cells, and DCI format 1_X is a DCI format for scheduling PDSCHs on multiple cells. Type-1 is divided into three sub-types.

[Table 5]

For discussing field design of DCI format 0_X/1_X which schedules more than one cell, reformulate the types of DCI fields as below:

- Type-1 field:

-- Type-1A field: A single field indicating common information to all the co-scheduled cells

-- Type-1B field: A single field indicating separate information to each of co-scheduled cells via joint indication

-- Type-1C field: A single field indicating an information to only one of co-scheduled cells

- Type-2 field: Separate field for each of the co-scheduled cells

(continued)

> - Type-3 field: Common or separate to each of the co-scheduled cells, or separate to each sub-group, dependent on explicit configuration.
>
> Note: One sub-group comprises a subset of co-scheduled cells where a single field is commonly applied to the co-scheduled cell(s) belonging to a same sub-group.

Corresponding to respective types in Table 5, the terms described in the present disclosure are the same as Methods 1 to 4.

Method 1: Shared-cell-common

Method in which only one field is configured within a multi-cell DCI and a value indicated by the DCI field is commonly applied to all cells (scheduled through the multi-cell DCI).

Method 2: Shared-state-extension

Method in which only one field is configured within a multi-cell DCI, and each of the multiple states to be indicated by a DCI field is configured/set by a combination of multiple pieces of information about multiple cells (not information about a single cell).

Method 3: Separate

Method in which a number of fields (within the DCI) equal to the number of cells scheduled through multi-cell DCI (with an operation configured according to the corresponding DCI field instruction) is configured, a separate field corresponds to each of the scheduled cells, and a value indicated by the corresponding field is applied to the corresponding cell.

Method 4: Shared-reference-cell

Method in which only one field is configured within multi-cell DCI, a value indicated by the corresponding DCI field is applied only to a specific reference cell (e.g., a cell to which the corresponding DCI is transmitted, a cell with the lowest or highest cell index, or a cell indicated by a CIF field value) (from among cells that are scheduled through multi-cell DCI and for which an operation is configured according to indication of the corresponding DCI field), and a specific default value predefined/configured is applied to the remaining cells.

Basically, a field to which the shared-cell common method is applied may correspond to Type-1A field. A field to which the shared-state-extension method is applied may correspond to Type-1B field. A field to which the shared-reference-cell method is applied may correspond to Type-1C field. A field to which the separate method is applied may correspond to Type-2 field. A field in which it is possible to change whether Method 1, 2, 3, or 4 is to be applied by by explicit setting may correspond to Type-3 fields.

The description of multi-cell scheduling for PDSCH in the present disclosure may be equally applied to multi-cell scheduling for a PUSCH. The description of a multi-cell scheduling operation for a PUSCH may be equally applied to multi-cell scheduling for a PDSCH. A part described as 'cell' in the present disclosure may also be interpreted as an (active) BWP set/indicated in the corresponding cell.

A reference cell may mean (i) a cell with the lowest (or highest) cell index, (ii) a cell with the earliest (or latest) indicated PDSCH/PUSCH transmission starting symbol time, (iii) a cell with the earliest (or latest) indicated PDSCH/PUSCH transmission ending symbol time, (iv) a cell indicated by a CIF field value, or (v) a cell predetermined via RRC within a combination of cells (co-scheduled cell set or each cell subgroup) that are simultaneously scheduled through the same multi-cell DCI.

When there are multiple cells with the earliest (or latest) PDSCH/PUSCH start symbol time, a cell with the lowest (or highest) cell index from among the multiple cells may be a reference cell. When there are multiple cells with the earliest (or latest) PDSCH/PUSCH end symbol time, a cell with the lowest (or highest) cell index from among the multiple cells may be a reference cell.

Alternatively, the reference cell may refer to (i) a cell with the lowest (or highest) cell index within a set of all cells schedulable via any multi-cell DCI (i.e., schedulable cell set), (ii) a cell indicated by a CIF field value, (iii) a cell to which the multi-cell DCI is transmitted, or (iv) a cell predetermined via RRC.

For fields to which the shared-reference-cell method, the shared-cell-common method, and/or the shared-state-extension method are applied, only one field may be configured within the multi-cell DCI (i.e., commonly applied to all cells belonging to the co-scheduled cell set).

Alternatively, for fields to which the shared-reference-cell method, the shared-cell-common method, and/or the shared-state-extension method are applied, all cells belonging to the co-scheduled cell combination may be grouped into one or more (or multiple) sub-groups, and one (commonly applied) field may be configured for each sub-group. Therefore, separate/independent fields may be configured between the respective sub-groups. Therethrough, the shared-reference-cell method, the shared-cell-common method, and/or the shared-state-extension method and the field/information configuration/instruction method based thereon may be applied for each sub-group.

Alternatively, for fields to which the shared-reference-cell method, the shared-cell-common method, and/or the shared-state-extension method are applied, all cells belonging to the schedulable cell set may be grouped into one or more (or multiple) sub-groups, and one (commonly applied) field may be configured for each sub-group. Therefore, separate/independent fields may be configured between the respective sub-groups. Therethrough, the shared-reference-cell method, the shared-cell-common method, and/or the shared-state-extension method and the field/information configuration/instruction method based thereon may be applied for each sub-group.

A sub-group may also be referred to as a cell subgroup. A cell subgroup may be cofnigured/set with a specific one or a specific plurality of cells belonging to the co-scheduled cell combination or schedulable cell combination. For example, a cell subgroup may be configured/set with some or all of the cells belonging to a co-scheduled cell combination or a schedulable cell combination.

In the existing case, the DCI field to which the shared-cell common method is applied may be structured such that a table including one or more states for each cell is preconfigured via RRC or MAC-CE, and one of the states in the table is indicated through the DCI field. The conventional case refers to single-cell DCI-based scheduling. One or more states may include different parameters/values or a combination thereof and may correspond to row indices in each table. Therefore, the 'state' may be replaced with 'index'. From among the DCI fields, the PRB bundling size indicator, Rate matching (RM) indicator, ZP CSI-RS trigger, and SRS request fields correspond to this structure. The DCI field corresponding to this structure may operate based on one or more of the following three options. In the options below, the cell set may refer to a schedulable cell set, a co-scheduled cell set, or a cell subgroup.

Opt X) A specific state indicated through a DCI field that is commonly configured for a set of cells to which the shared-cell-common method is applied may be interpreted/applied (for each cell) as a parameter/value or a combination thereof corresponding to the state in a table configured for each cell belonging to the set of cells.

Opt Y) A specific state indicated through a DCI field that is commonly configured for a set of cells to which the shared-cell-common method is applied may be interpreted as a parameter/value or a combination thereof corresponding to the state in a table configured for a specific reference cell within the set of cells, and may be commonly applied to cells belonging to the set of cells.

Opt Z) A specific state indicated through a DCI field that is commonly configured for a set of cells to which the shared-cell-common method is applied may be commonly applied to cells belonging to the set of cells by being interpreted as a parameter/value or a combination thereof corresponding to the state in the common table, in a state in which a separate common table to be commonly applied to the set of cells is preconfigured via RRC/MAC-CE.

**[Common-T1A: Invalid state handling]**

First, the Type-1A field or the shared-cell-common method (specifically the Opt X method) is proposed below in more detail.

First, in the existing s-CC DCI-based scheduling, for a specific DCI field (such as SRS resource indicator, Precoding information and number of layers), when one of the N states is indicated through the corresponding DCI field in a state in which N parameters/values or a combination thereof are preconfigured via RRC or MAC-CE for each of N states to be indicated by the corresponding DCI field, the UE performs a PDSCH/PUSCH transmission/reception operation by applying the parameters/values or a combination thereof configured for the indicated state. In this case, the size of the DCI field may be determined as ceil $\{\log_2(N)\}$ bits (or K bits). Here, the N (or K) value may be configured to a different (or the same) value for each cell.

For the specific DCI field in m-CC DCI-based scheduling, when parameters/values or a combination thereof are preconfigured for each state (applicable to s-CC DCI-based scheduling) for each cell as described above, if a specific state is indicated through the DCI field, the UE may perform transmission/reception operations for the PDSCH/PUSCH scheduled for each cell by interpreting/applying the parameters/values or a combination thereof set for each cell for the indicated state, respectively.

In m-CC DCI-based scheduling, the size of the specific DCI field may be determined by one of the following three methods by using N_max, which is the maximum value, and N_min, which is the minimum value, from among the N values set for each cell belonging to the set of all schedulable cells (or each co-scheduled cell set).

Alt-A) Determined by ceil $\{\log_2(N\_max)\}$ bits based on the maximum value N_max (in this case, it may be a structure in which up to (the first) N_max states/indexes are indicated through the DCI field)

Alt-B) Determined by ceil $\{\log_2(N\_min)\}$ bits based on the minimum value N_min (in this case, it may be a structure in which only up to (the first) N_min states/indexes are indicated through the DCI field)

Alt-C) Determined by ceil $\{\log_2(N\_exp)\}$ bits based on a specific value (=N_exp) configured separately (in this case, it may be a structure in which only up to (the first) N_exp states/indexes are indicated through the DCI field)

When the Alt-A method or the Alt-C method is applied, if a specific state (e.g., a state higher than {N_low - 1}) is indicated through a specific DCI field for a specific cell (e.g., a cell in which N is set to N_low, which is a value less than N_max), a parameter/value or a combination thereof configured for the corresponding state may not exist for cell X. Considering this case, the following operation is proposed. For convenience, M = ceil $\{\log_2 (N\_max)\}$ and K = ceil $\{\log_2 (N\_low)\}$ (M ≥ K) are defined. Specifically, for the field of the precoding information and number of layers, a state corresponding to the Reserved value may or may not be included in N_max / N_low. In the following description, values of the DCI fields corresponding to N states/indexes are assumed to be 0, ..., N-1.

1) Alt 1: For the cell X, only the first K (MSB) bits or the last K (LSB) bits from among the M bits in the DCI field are interpreted and applied.

A. When a state/index with a value higher than {N_low - 1} is indicated through the K bits, the operation of Alt 3 or Alt 6 may be applied.
B. For example, for the SRI (SRS resource indicator) field, when M=3 and K allocated for cell X is K=2, the SRI field may be interpreted using only the first or last 2 bits out of 3 bits.
C. For example, for the field of the precoding information and number of layers, when M=5 and K allocated for cell X is K=4, the field of the precoding information and number of layers may be interpreted using only the first or last 4 bits out of 5 bits.

2) Alt 2: When a state higher than {N_low - 1} is indicated through the DCI field above, a specific parameter/value or a combination thereof separately preconfigured/predefined for the cell X is applied.

A. The specific parameter/value or combination thereof may be configured/defined as a specific parameter/value or combination thereof linked to a specific one (e.g. lowest or highest) value from among the N_low states preconfigured for the cell X.
B. For example, for the SRI field, the specific parameter/value or a combination thereof may be configured/defined as a specific SRS resource index linked to a specific one (e.g. lowest or highest) of the N_low states preconfigured for the cell X, or a specific SRS resource index (e.g. lowest/highest index) linked to a specific L_max value (e.g. lowest/highest L_max).
C. For example, for the field of the precoding information and number of layers, the specific parameter/value or a combination thereof may be configured/defined as a specific one of the N_low states preset for the corresponding cell X (e.g. the lowest or highest state/index not linked to the Reserved value).

Alt 3: When a state/index with a value higher than {N_low - 1} is indicated through the DCI field, it is considered that there is no PDSCH/PUSCH scheduling for the cell X.

A. Accordingly, the UE may omit PDSCH/PUSCH transmission and reception operations on the corresponding cell X (in the case of PDSCH, the corresponding HARQ-ACK is fed back as NACK).
B. For example, when a state higher than {N_low - 1} is indicated for the SRI field, the UE may consider that there is no PUSCH/SRS scheduling for the cell X and may omit PUSCH/SRS transmission/reception operations on the cell X.
C. For example, when a value higher than {N_low - 1} is indicated for the field of the precoding information and number of layers, the UE may consider that there is no PDSCH/PUSCH scheduling for the cell X, and may omit the PDSCH/PUSCH transmission/reception operation on the cell X (in the case of PDSCH, the corresponding HARQ-ACK may be fed back as NACK).

4) Alt 4: For the cell X, {N_max - N_low} = N_gap parameters/values or a combination thereof corresponding to each state from N_low to N_max - 1 may be additionally configured and applied.

A. The additional parameters/values or combinations thereof may be configured as additional parameters/values or combinations thereof linked to specific N_gap states from among the N_low states preconfigured for the cell X.
B. For example, for the SRI field, SRS resource(s) linked to a specific state from among the preset N_low states may be mapped to N_gap states.
C. For example, for the field of the precoding information and number of layers, parameters/values linked to specific N_gap states from among the N_low states (excluding the state/index corresponding to the Reserved value) or a combination thereof may be configured.

5) Alt 5: For the cell X, this may be interpreted and applied as a state corresponding to the value obtained by performing modulo-N_low operation on the state indicated by the DCI field.

A. For example, when N_low = 5 and N_max = 8, each state {0,1,2,3,4,5,6,7} indicated by the DCI field may be interpreted/applied as state {0,1,2,3,4,0,1,2} for the cell X, respectively.
B. For example, for the SRI field, when N_low = 5 and N_max = 8, each state {0,1,2,3,4,5,6,7} indicated by the field may be interpreted/applied as SRS resource index #0/1/2/3/4/0/1/2 for the cell X, respectively.
C. For example, for the field of the precoding information and number of layers, if N_low = 5 and N_max = 8, each state {0,1,2,3,4,5,6,7} indicated by the DCI field may be interpreted/applied as state {0,1,2,3,4,0,1,2} for the cell X, respectively.

Alt 6: When a state/index with a value higher than {N_low - 1} is indicated through the DCI field, the most recently indicated state for the cell X may be applied/maintained.

A. Accordingly, the UE may perform PDSCH/PUSCH transmission/reception operations on the cell X by applying/-maintaining the recently instructed state to the cell X.
B. For example, in the case of the SRI field, the UE may perform PUSCH/SRS transmission/reception operations on the cell X by applying/maintaining the recently indicated SRI value (via the SRI field in the same DCI format or a different DCI format) to the cell X.
C. For example, in the case of the field of the precoding information and number of layers, the UE may perform PDSCH/PUSCH transmission/reception operations on the corresponding cell X by applying/maintaining the recently indicated state (via the corresponding field in the same DCI format or a different DCI format) to the corresponding cell X.

**[Common-T2: Field size determination]**

The following is a specific proposal for a method of determining the DCI field size for Type-2 field or a field to which the separate method is applied.
In the case of a specific DCI field in the existing s-CC DCI, when N states are to be indicated through the DCI field, the size of the DCI field may be configured to $L = \text{ceil}\{\log_2(N)\}$ bits. L may be configured to a different (or the same) value for each cell. The specific DCI fields may include SRI fields and a field of the precoding information and number of layers.
When the specific DCI field in the m-CC DCI is configured based on Type-2 field method, for each of the multiple (e.g., N_co) co-scheduled cell combinations configured in the entire schedulable cell combination, the sum L_sum of the L values configured for each cell belonging to the co-scheduled cell combination is calculated. For each of the N_co co-scheduled cell combinations, the maximum of the N_co L_sum values calculated may be determined as the size of the corresponding specific DCI field (configured within the m-CC DCI).
For example, for the SRI field, for each of the multiple (e.g., N_co) co-scheduled cell combinations configured in the entire schedulable cell combination, the sum L_sum of the L values (for the SRI field) configured in each of the cells belonging to the co-scheduled cell combination is calculated. For each of the N_co co-scheduled cell combinations, the maximum of the N_co L_sum values calculated may be determined as the size of the corresponding SRI field (configured within the m-CC DCI).
For example, for the field of the precoding information and number of layers, for each of multiple (e.g., N_co) co-scheduled cell combinations (in particular, cells with CB-based UL set) configured in the entire fully schedulable cell combination, the sum L_sum of the L values (for the field of the precoding information and number of layers) configured for each of the cells (in particular, cells with CB-based UL set) belonging to the corresponding co-scheduled cell combination is calculated. For each of the N_co co-scheduled cell combinations, the maximum of the N_co L_sum values calculated may be determined as the size of the field of the precoding information and number of layers (configured within the m-CC DCI).

**[Configure table size for m-CC DCI (reduced than s-CC DCI)]**

For a specific DCI field (SRI, Precoding information and number of layers, and the like) to which Type-2 field design method is applied, N_cfg states to be indicated through the corresponding DCI field in the m-CC DCI and the corresponding field size $L\_cfg = \text{ceil}\{\log_2(N\_cfg)\}$ may be separately configured. In this case, it may be configured in the form N_cfg < N and/or L_cfg < L. Type-2 field design method may include a shared-cell common method based on the DCI field size determination method and/or the Opt X method. N_cfg states and corresponding field sizes L_cfg may be configured for each cell.

In detail, for a specific DCI field within the m-CC DCI as described above, when N_cfg states and field size L_cfg are separately configured for a specific cell, Type-2 field design method is applied to the cell based on the number/set of states and the field size. When there is no separate settings, Type-2 field design method may be applied based on the N states and field size L configured in s-CC DCI.

For example, for the SRI field, the reference cell for m-CC DCI use, L_max, N_srs, and/or the number of SRS resources for a specific cell X may be defined/configured/indicated. When the SRI field in m-CC DCI is configured and/or multiple CCs are scheduled via m-CC DCI, N_cfg states and field size L_cfg may be determined for the cell based on a given reference cell, L_max, N_srs, and/or number of SRS resources. When the SRI field in m-CC DCI is configured and/or multiple CCs are scheduled through m-CC DCI, for a cell for which the reference cell, L_max, N_srs, and/or number of SRS resources are not defined/configured/indicated, the SRI field in the m-CC DCI for the cell may be configured based on the N states and field size L configured in the s-CC DCI.

For example, for the field of the precoding information and number of layers, for a specific cell X, the reference cell for m-CC DCI purposes, the maximum number of ranks, the valid/invalid row index(es) from among the rows of the table corresponding to the cell, and/or constraints on the codebookSubset parameter may be defined/configured/indicated as in the proposal below. When a field of the precoding information and number of layers in m-CC DCI are configured and/or multiple CCs are scheduled through m-CC DCI, N_cfg states and field size L_cfg may be determined for the cell based on constraints on a given reference cell, a maximum number of ranks, valid/invalid row index(es) from among rows of the table corresponding to the cell, and/or codebookSubset parameter. When the field of the precoding information and number of layers in m-CC DCI are configured and/or multiple CCs through m-CC DCI are scheduled, for a cell for which reference cell, maximum number of ranks, valid/invalid row index(es) from among rows of table corresponding to the cell, and/or constraints on codebookSubset parameter are not defined/configured/indicated, the field of the precoding information and number of layers in m-CC DCI for the cell may be configured based on N states configured in s-CC DCI and field size L.

[1] SRS resource instruction related fields

Table 6 shows the DCI fields related to the indication of SRS resources disclosed in the 3GPP TS 38.212 document.

[Table 6]

- SRS resource set indicator - 0 or 2 bits
    - 2 bits according to Table 7.3.1.1.2-36 if
        - *txConfig = nonCodeBook,* and there are two SRS resource sets configured by *srs-ResourceSet-ToAddModList* and associated with the *usage* of value *'nonCodeBook',* or
        - *txConfig=codebook,* and there are two SRS resource sets configured by *srs-ResourceSetToAddMod-List* and associated with *usage* of value *'codebook';*
    - 0 bit otherwise.

- SRS resource indicator - $\left\lceil \log_2\left( \sum_{k=1}^{\min\{L_{\max},N_{SRS}\}} \binom{N_{SRS}}{k} \right) \right\rceil$ or $\left\lceil \log_2(N_{SRS}) \right\rceil$ bits, where $N_{SRS}$ is the number of configured SRS resources in the SRS resource set indicated by SRS resource set indicator field if present; otherwise $N_{SRS}$ is the number of configured SRS resources in the SRS resource set configured by higher layer parameter *srs-ResourceSetToAddModList* and associated with the higher layer parameter *usage* of value *'codebook'* or *'nonCodeBook',*

- $\left\lceil \log_2\left( \sum_{k=1}^{\min\{L_{\max},N_{SRS}\}} \binom{N_{SRS}}{k} \right) \right\rceil$ bits according to Tables 7.3.1.1.2-28/29/30/31 if the higher layer parameter *txConfig = nonCodebook,* where $N_{SRS}$ is the number of configured SRS resources in the SRS resource set indicated by SRS resource set indicator field if present, otherwise $N_{SRS}$ is the number of configured SRS resources in the SRS resource set configured by higher layer parameter *srs-ResourceSetToAddModList* and associated with the higher layer parameter *usage* of value *'nonCodeBook',* and

(continued)

- if UE supports operation with *maxMIMO-Layers* and the higher layer parameter *maxMIMO-Layers* of *PUSCH-ServingCellConfig* of the serving cell is configured, $L_{max}$ is given by that parameter
- otherwise, $L_{max}$ is given by the maximum number of layers for PUSCH supported by the UE for the serving cell for non-codebook based operation.

- $\lceil \log_2(N_{SRS}) \rceil$ bits according to Tables 7.3.1.1.2-32, 7.3.1.1.2-32A and 7.3.1.1.2-32B if the higher layer parameter *txConfig = codebook,* where $N_{SRS}$ is the number of configured SRS resources in the SRS resource set indicated by SRS resource set indicator field if present, otherwise $N_{SRS}$ is the number of configured SRS resources in the SRS resource set configured by higher layer parameter *srs-ResourceSet-ToAddModList* and associated with the higher layer parameter *usage* of value *'codeBook'*.

- Second SRS resource indicator - 0, $\left\lceil \log_2 \left( \max_{k \in \{1,2,\ldots,\min\{L_{max},N_{SRS}\}\}} \binom{N_{SRS}}{k} \right) \right\rceil$ or $\lceil \log_2(N_{SRS}) \rceil$ bits,

- $\left\lceil \log_2 \left( \max_{k \in \{1,2,\ldots,\min\{L_{max},N_{SRS}\}\}} \binom{N_{SRS}}{k} \right) \right\rceil$ bits according to Tables 7.3.1.1.2-28/29A/30A/31A with the same number of layers indicated by SRS resource indicator field if the higher layer parameter *txConfig = nonCodebook* and SRS resource set indicator field is present, where $N_{SRS}$ is the number of configured SRS resources in the second SRS resource set, and

- if UE supports operation with *maxMIMO-Layers* and the higher layer parameter *maxMIMO-Layers* of *PUSCH-ServingCellConfig* of the serving cell is configured, $L_{max}$ is given by that parameter
- otherwise, $L_{max}$ is given by the maximum number of layers for PUSCH supported by the UE for the serving cell for non-codebook based operation.

- $\lceil \log_2(N_{SRS}) \rceil$ bits according to Tables 7.3.1.1.2-32, 7.3.1.1.2-32A and 7.3.1.1.2-32B if the higher layer parameter *txConfig = codebook* and SRS resource set indicator field is present, where $N_{SRS}$ is the number of configured SRS resources in the second SRS resource set.
- 0 bit otherwise.

<'SRS resource set indicator' field>

When multiple transmission and reception points (TRPs) are configured for UL transmission of the UE, the field indicates a single TRP from among the TRPs to be used by the scheduled PUSCH, or the field indicates an transmission order of multiple TRPs to be used by the scheduled PUSCH. When the PUSCH is transmitted through a single TRP, it may be referred to as single-TRP operation, and when the PUSCH is transmitted through multiple TRPs, it may be referred to as multi-TRP operation.

Table 7 is Table 7.3.1.1.2-36 described in the 3GPP TS 38.212 document, and shows the fields and SRS resource sets configured by the value of the SRS resource set indicator field.

[Table 7]

| Bit field mapped to index | SRS resource set indication |
|---|---|
| 0 | SRS resource indicator field and Precoding information and number of layers field are associated with the first SRS resource set;<br>Second SRS resource indicator field and Second Precoding information field are reserved. |
| 1 | SRS resource indicator field and Precoding information and number of layers field are associated with the second SRS resource set;<br>Second SRS resource indicator field and Second Precoding information field are reserved. |

(continued)

| Bit field mapped to index | SRS resource set indication |
|---|---|
| 2 | SRS resource indicator field and Precoding information and number of layers field are associated with the first SRS resource set; Second SRS resource indicator field and Second Precoding information field are associated with the second SRS resource set. |
| 3 | SRS resource indicator field and Precoding information and number of layers field are associated with the first SRS resource set; Second SRS resource indicator field and Second Precoding information field are associated with the second SRS resource set. |

NOTE 1: The first and the second SRS resource sets are respectively the ones with lower and higher *srs-ResourceSetId* of the two SRS resources sets configured by higher layer parameter *srs-ResourceSetToAddModList* or *srs-ResourceSetToAddModListDCI-0-2*, and associated with the higher layer parameter *usage* of value *'nonCodeBook'* if *txConfig=nonCodebook* or *'codebook'* if *txConfig=codebook.* When only one SRS resource set is configured by higher layer parameter *srs-ResourceSetToAddModList* or *srs-ResourceSetToAddModListDCI-0-2,* and associated with the higher layer parameter usage of value *'codebook'* or *'nonCodeBook'* respectively, the first SRS resource set is the SRS resource set. The association of the first and second SRS resource sets to PUSCH repetitions for each bit field index value is as defined in Clause 6.1.2.1 of [6, TS 38.214].

NOTE 2: For DCI format 0_2, the first and second SRS resource sets configured by higher layer parameter *srs-ResourceSetToAddModListDCI-0-2* are composed of the first $N_{SRS,0\ 2}$ SRS resources together with other configurations in the first and second SRS resource sets configured by higher layer parameter *srs-ResourceSetToAddModList,* if any, and associated with the higher layer parameter *usage* of value *'codebook'* or *'nonCodeBook',* respectively, except for the higher layer parameters *'srs-ResourceSetId' and 'srs-ResourceIdList'.*

Considering a payload size of m-CC DCI, the SRS resource set indicator field may not exist in m-CC DCI. Alternatively, the SRS resource set indicator field may be present in the DCI only in the case of an s-CC scheduling case, and the SRS resource set indicator field may not be present in the DCI in the case of an m-CC scheduling case. Alternatively, even in the s-CC scheduling case, if multi-TRP UL operation is not configured for the corresponding scheduled cell, the corresponding field may be defined not to exist. Therefore, the SRS resource set indicator field may be present in the DCI only when scheduling in a cell in which multi-TRP UL operation is configured and it is an s-CC scheduling case.

Alternatively, when a multi-TRP UL operation is configured on a cell scheduled through an m-CC scheduling case or an s-CC scheduling case but the field does not exist, the single-TRP operation or multi-TRP operation corresponding to a code point for the cell may be predefined/configured or updated through a MAC CE (control element). For example, when multi-TRP UL operation is configured for CC#1 and PUSCHs are scheduled on multiple cells including CC#1 via m-CC DCI, even if the corresponding SRS resource set indicator field does not exist, the UE may interpret the SRS resource indicator field and the field of the precoding information and number of layers based on the first SRS resource set information according to a pre-configured rule (as if the '00' codepoint is indicated via the corresponding field). For example, the UE may be preconfigured to consider that field as corresponding to the code point '00' and operate in the corresponding mode. For example, a preconfiguring method may be a method of prereceiving instructions via MAC CE.

Options 1-1 and 1-2 below disclose a method of applying the 'SRS resource set indicator' field when CCs with and without multi-TRP UL operation are grouped into a shared CC group.

(Opt 1-1) When a CC configured with multi-TRP UL operation and a CC configured without multi-TRP UL operation are configured to a shared CC group, the SRS resource set indicator field configuration is omitted, and the SRS resource (or SRS resource set) related operation of the CC with multi-TRP UL operation set may be predefined or indicated via MAC CE. For example, the UE may be predefined/configured to consider that field as corresponding to the code point '00' and operate in the corresponding mode.

(Opt 1-2) CCs configured with multi-TRP UL operation and CCs configured without multi-TRP UL operation are shared CCs. When configured to a group, the SRS resource set indicator field is present or configured in the DCI, and for CCs for which multi-TRP UL operation is not configured, the field is disregarded, and for CCs for which multi-TRP UL operation is configured, the index indicated through the field may be commonly applied.

<'SRS resource indicator' field>

For a scheduled cell, the SRI indication method may differ depending on whether the transmission scheme configured for the UE is codebook based transmission or non-codebook based transmission. Codebook-based transmission means that txConfig in the RRC parameter PUSCH-Config is configured to 'codebook'. Codebook-based transmission is also referred to as CB-based UL. Codebook-based transmission means that txConfig in the RRC parameter PUSCH-Config is configured to 'nonCodebook'. Non-codebook based transmission is also referred to as NCB-based UL.

Specifically, for NCB-based UL, the number of layers is determined based on the number of SRS resources (=N_srs) indicated from among the number of SRS resources in the SRS resource set. Therefore, the required bits in the SRI field is equal to $\left\lceil \log_2 \left( \sum_{k=1}^{\min\{L_{\max}, N_{SRS}\}} \binom{N_{SRS}}{k} \right) \right\rceil$ (where L_max is the maximum number of PUSCH layers that the UE may support). For CB-based UL, one of the N_srs SRS resources is selected, and the number of layers is finally determined through the SRS resource and TPMI. Therefore, the required bits in the SRI field is $\left\lceil \log_2 (N_{SRS}) \right\rceil$ .

For cells with NCB-based UL scheduled via the same m-CC DCI, bits may be saved if there is a constraint that the number of layers may be the same between the cells. Even for the 'Second SRS resource indicator' field, if the number of layers between the two TRP transmissions is the same, only the

$\left\lceil \log_2 \left( \max_{k \in \{1,2,...,\min\{L_{max}, N_{SRS}\}\}} \binom{N_{SRS}}{k} \right) \right\rceil \left\lceil \log_2 \left( \max_{k \in \{1,2,...,\min\{L_{max}, N_{SRS}\}\}} \binom{N_{SRS}}{k} \right) \right\rceil$ bits are required, not

the $\left\lceil \log_2 \left( \sum_{k=1}^{\min\{L_{\max}, N_{SRS}\}} \binom{N_{SRS}}{k} \right) \right\rceil$ bits. When one specific cell from among multiple scheduled cells scheduled through the same m-CC DCI is configured as a reference cell, SRI may be indicated through $\left\lceil \log_2 \left( \sum_{k=1}^{\min\{L_{\max}, N_{SRS}\}} \binom{N_{SRS}}{k} \right) \right\rceil$

bits for the corresponding reference cell and may be indicated through the

$\left\lceil \log_2 \left( \max_{k \in \{1,2,...,\min\{L_{max}, N_{SRS}\}\}} \binom{N_{SRS}}{k} \right) \right\rceil \left\lceil \log_2 \left( \max_{k \in \{1,2,...,\min\{L_{max}, N_{SRS}\}\}} \binom{N_{SRS}}{k} \right) \right\rceil$ bits for other scheduled cells except for the corresponding reference cell.

A rule may be needed as to which of the multiple scheduled cells is designated as the reference cell. For example, a reference cell may be defined and/or configured as a cell with the lowest cell index, a cell with the highest cell index, a cell with the lowest SCS set, a cell with the highest SCS set, a scheduling cell in which m-CC DCI is transmitted, a cell with the minimum number of SRS resources in an SRS resource set, or a cell with the maximum number of resources in an SRS resource set. Alternatively, the reference cell may be defined and/or configured as a specific (one) cell within each scheduled cell combination based on a combination of cells scheduled by the m-CC DCI.

The constraint on the number of layers may only be applied to the m-CC scheduling case, and there may be no constraint on the number of layers for the s-CC scheduling case. In this case, a number of fields equal to the number of cells scheduled through m-CC DCI (for which an operation is configured according to the corresponding DCI field instruction) are configured within the corresponding DCI. The SRI field may be configured in such a way that each scheduled cell corresponds to a separate field and a value indicated by the corresponding field is applied to the corresponding cell. This method of configuring fields is referred to as the "Type-2 field design method".

For cells configured with NCB-based UL, the L_max value may be configured/applied differently depending on the number of cells that m-CC DCI schedules (simultaneously). For example, in the s-CC scheduling case, even though the L_max value follows a predefined/configured value for each cell, the L_max value may be constrained to K in the m-CC scheduling case. The K value may be configured or predefined. For example, K=1. Alternatively, in the scheduling case based on m-CC DCI, the value of L_max may always be constrained to K. The K value may be configured or predefined. For example, K=1. In this case, a number of fields equal to the number of cells scheduled through m-CC DCI (for which an operation is configured according to the corresponding DCI field instruction) are configured within the corresponding DCI. The SRI field may be configured in such a way that each scheduled cell corresponds to a separate field and a value indicated by the corresponding field is applied to the corresponding cell. This method of configuring fields is referred to as the "Type-2 field design method".

For cells configured with CB-based UL and/or NCB-based UL, the N_srs value may be configured/applied differently depending on the number of cells that m-CC DCI schedules (simultaneously). For example, in the s-CC scheduling case, even though the N_srs value follows a predefined/preconfigured value for each cell, the N_srs value may be constrained to K in the m-CC scheduling case. The K value may be configured or predefined. For example, K=1. Alternatively, in the scheduling case based on m-CC DCI, the value of N_srs may always be constrained to K. The K value may be configured or predefined. For example, K=1.

Even if the number of SRS resources in the SRS resource configured for a specific cell (in the case scheduled with s-CC DCI) is N1, only a number of SRS resources less than N1 (=N2) may be allowed in a scheduling case based on m-CC DCI or the m-CC scheduling case. In this case, a rule about which N2 SRS resources to choose may be required. For example, N2 SRS resources (or SRIs) with indices that are the lowest index, the highest index, or a multiple of a specific N value within the SRS resource set may be selected. From among the SRS resources in the SRS resource set, specific N2 SRIs may be preconfigured separately for scheduling cases based on m-CC DCI or m-CC scheduling cases.

For example, in the s-CC scheduling case, the SRI field/information is configured/indicated based on N1 SRIs. In the m-CC scheduling case, the SRI fields/information for each cell may be (separately) configured/indicated based on N2 SRIs (which are less than N1). Alternatively, a constraint may be imposed on cells configured as an m-CC DCI scheduling target such that only one SRS resource is always configured within the SRS resource set. In this case, a number of fields equal to the number of cells scheduled via m-CC DCI (for which an action is configured according to the corresponding DCI field instruction) are configured within the corresponding DCI. The SRI field may be configured in such a way that each scheduled cell corresponds to a separate field and a value indicated by the corresponding field is applied to the corresponding cell. This method of configuring fields is referred to as the "Type-2 field design method".

For multiple cells scheduled through the same m-CC DCI, when there are a number of SRI code points required for each cell, if an SRI field is configured in the m-CC DCI with bits equivalent to the product of the numbers of code points required for each cell rather than the sum of bits converted to the number of code points required for each cell, the bits required may be minimized. For example, when PUSCHs on cell #1/2/3 are scheduled via m-CC DCI, 10 code points may be required for cell #1, 10 code points may be required for cell #2, and 10 code points may be required for cell #3. When an SRI field with bits equal to the product of the number of code points required for each cell is configured in the m-CC DCI, the SRI field may be configured with $\text{ceil}\{\log_2(10\times10\times10)\}=10$ bits instead of 4+4+4=12 bits.

Alternatively, a combination of multiple SRI information for multiple cells may be indicated via a single code point. A single code point may be indicated by a single SRI field configured within the m-CC DCI. For example, when PUSCHs are scheduled on cell #1/2/3, the SRI field is configured with 1 bit. In detail, when '0' is indicated by a 1-bit SRI field, the UE may recognize that SRI=0 for cell#1, SRI=1 for cell #2, and SRI=0,1 for cell #3, and when '1' is indicated, the UE may recognize that SRI=1 for cell#1, SRI=0 for cell #2, and SRI=1,2 for cell #3. As such, the SRI value for each cell corresponding to each code point may be preconfigured and/or indicated via MAC CE. Depending on how many code points are configured and/or indicated via MAC CE, the final bits in the SRI may be determined. For example, when values are configured for K code points, $\text{ceil}\{\log_2(K)\}$ bits may be allocated to one SRI field.

A method of indicating a combination of multiple SRI information for multiple cells through one code point may be applied for each cell(s) configured with CB-based UL and cell(s) configured with NCB-based UL, scheduled through the same m-CC DCI. For example, in a state in which two SRI fields are configured in the m-CC DCI, a combination of multiple SRI information for multiple cells for which CB-based UL is configured may be indicated through the first SRI field, and a combination of multiple SRI information for multiple cells for which NCB-based UL is configured may be indicated through the second SRI field.

Options 2-1 to 2-3 disclose a method of applying the 'SRS resource indicator' field when a CC configured with NCB-based UL operation and a CC(s) configured with CB-based UL operation are grouped into a shared CC group.

In options 2-1 to 2-3, a constraint may be considered to ensure that only CCs of the same type belong to a shared CC group. This constraint requires that all CCs belonging to the shared CC group be configured as NCB-based ULs only or as CB-based ULs only.

(Opt 2-1) The number of code points indicated by the 'SRS resource indicator' field required for each CC belonging to the same shared CC group may be configured to the same number. For example, the SRI field may be configured based on the minimum number of code points configured for single-cell scheduling for each CC. In this case, for a CC configured with more code points than the minimum value (e.g. N), only the code points corresponding to the lowest or highest N indices may be indicated.

(Opt 2-2) The SRI field may be configured based on the maximum number of code points configured for single-cell scheduling for each CC. When the code point indicated through that field is not valid for a particular CC, no scheduling is considered for the corresponding CC.

(Opt 2-3) Basically, the SRI field is configured in the same manner as Opt 2-2 above, but if the indicated code point is not valid for a specific CC, the UE may operate to assume/apply a specific code point predefined/configured for the corresponding CC.

Alternatively, different types of CCs may be allowed to belong to a shared CC group. That is, it may be allowed for some CCs within a shared CC group to have NCB-based ULs configured, and other CCs to have CB-based ULs configured. Option A and Option B disclose a method of applying the 'SRS resource indicator' field when different types of CCs belong to a shared CC group.

(OptA) In this case, the number of code points required for each CC within the shared CC group is limited to 1, and the code points may be preconfigured or indicated via MAC CE. The SRI field configuration within the DCI may be omitted.

(OptB) SRI fields and/or corresponding tables are configured for specific types (e.g. CB-based UL). For other types (e.g. NCB-based UL), a default codepoint may be applied. The default code point may be preconfigured or indicated via MAC CE. Opt 2-1 / 2-2 / 2-3 above may be applied as a method of configuring the SRI field for a specific type in OptB.

When NCB-based UL is configured for some of the co-scheduled CCs and CB-based UL is configured for other CCs, Type-2 method may be applied to the SRI field (when there is no separate configuration for Type-1A or Type-2). In other words, when the configuration for NCB-based UL or CB-based UL is different from among CCs within co-scheduled CCs, the UE may not expect the configuration of Type-1A in the SRI field. When all CCs are commonly configured as NCB-based UL or CB-based UL, the Type-1A method may be applied to the SRI field (when there is no separate configuration for Type-1A or Type-2).

When multiple SRS resource sets are configured for a specific cell (for m-TRP operation), if a PUSCH/SRS on the corresponding specific cell is scheduled via m-CC DCI, it may need to be determined which SRI within which SRS resource set is indicated via the SRI field. As one method, the SRS resource set corresponding to the highest or lowest SRS resource set index configured for the corresponding specific cell may be applied (or used/configured) when scheduling the PUSCH/SRS on the corresponding specific cell via m-CC DCI. As another method, the SRS resource set corresponding to a specific SRS resource set index via separate configuration/indication of a BS may be applied (or used/configured) when scheduling the PUSCH/SRS on the corresponding specific cell via m-CC DCI.

<'Second SRS resource indicator' field>

The corresponding field is activated only when the SRS resource set indicator field indicates that the second SRS resource set is valid, otherwise it is considered reserved.

The corresponding field may not exist in m-CC DCI. Alternatively, the corresponding field may exist only in the s-CC scheduling case and not in the m-CC scheduling case. Even in the s-CC scheduling case, if multi-TRP UL operation is not configured for the corresponding scheduled cell, the corresponding field may be defined not to exist. For example, the Second SRS resource indicator field may be present when scheduling is performed only for cells configured with multi-TRP UL operation and in the s-CC scheduling case.

Alternatively, when the second SRS resource set is indicated to be valid on a cell scheduled through an m-CC scheduling case or an s-CC scheduling case (by the above method) but the field does not exist, the SRI(s) corresponding to which code point is to be applied for the cell may be predefined/configured or updated through a MAC CE. As one method, the UE may consider that the same SRI is indicated (for the corresponding cell) via the 'SRS resource indicator' field. Alternatively, which SRI is to be used on the second SRS resource set may be preconfigured/defined. For example, the SRS resource with the lowest or highest index within the SRS resource set may be selected, and a specific SRI may be preconfigured. Alternatively, a configuration constraint may be imposed such that only one SRS resource is always configured within the second SRS resource set for cells configured with m-CC DCI.

For reference, according to the 3GPP agreement, when the UE is configured with CB-based SRS resource sets or NCB-based SRS resource sets, a PUSCH scheduled by multi-cell DCI is always associated with a first SRS resource set (If the UE is configured with two SRS resource sets with 'codebook' or 'non-codebook', a PUSCH scheduled by DCI format 0_X is always associated with the first SRS resource set with 'codebook' or 'non-codebook'). Referring to Table 7, the first and the second SRS resource sets are respectively ones with lower and higher ResourceSetId of the two SRS resources sets configured by RRC parameter ResourceSetToAddModList or srs-ResourceSetToAddModListDCI-0-2 (NOTE 1 of Table 7: The first and the second SRS resource sets are respectively the ones with lower and higher srs-ResourceSetId of the two SRS resources sets configured by higher layer parameter srs-ResourceSetToAddModList or srs-ResourceSetToAddModListDCI-0-2). srs-ResourceSetId may be an ID of the SRS resource set and indicated by an integer between 0 and maxNrofSRS-ResourceSets-1. maxNrofSRS-ResourceSets may be, for example, 16. A first SRS resource set corresponds to a lower one (a resource set with a lower index than a second SRS resource set) and the second SRS resource set corresponds to a higher one (a resource set with a higher index than an index of the first SRS resource set). In conclusion, when CB-based SRS resource sets or NCB-based SRS resource sets are configured in the UE, the PUSCH scheduled by multi-cell DCI is always associated with the SRS resource set of a lower index.

For example, when two NCB-based SRS resource sets are configured and an SRI value is given by the m-CC DCI field, the UE may apply the indicated SRI to PUSCH repetition according to the first SRS resource set.

Options 3-1 and 3-2 propose a method of applying the 'Second SRS resource indicator' field when CCs configured with and without multi-TRP UL operation are grouped into a shared CC group.

(Opt 3-1) When a CC configured with multi-TRP UL and a CC configured without multi-TRP UL are grouped into a shared CC group, the configuration of the 'Second SRS resource indicator' field is omitted, and the (SRS resource related) operation of the CC configured with multi-TRP UL operation may be applied to a second SRI in the same manner as predefined, indicated via MAC CE, or indicated through the SRI field.

(Opt 3-2) The 'Second SRS resource indicator' field is present or configured, but is disregarded for CCs for which multi-TRP UL operation is not configured. For CCs configured with multi-TRP UL operation, an index indicated through the corresponding field may be applied commonly.

[2] Fields related to TPMI and layer number settings

Table 8 shows the DCI fields related to TPMI and number of layers disclosed in the 3GPP TS 38.212 document.

[Table 8]

- Precoding information and number of layers - number of bits determined by the following:
    - 0 bits if the higher layer parameter *txConfig = nonCodeBook;*
    - 0 bits for 1 antenna port and if the higher layer parameter *txConfig = codebook;*
    - 4, 5, or 6 bits according to Table 7.3.1.1.2-2 for 4 antenna ports, if *txConfig = codebook, ul-FullPowerTransmission* is not configured or configured to *fullpowerMode2* or configured to *fullpower,* transform precoder is disabled, and according to the values of higher layer parameters *maxRank,* and *codebookSubset;*
    - 4 or 5 bits according to Table 7.3.1.1.2-2A for 4 antenna ports, if *txConfig = codebook, ul-FullPowerTransmission = fullpowerMode1, maxRank=2,* transform precoder is disabled, and according to the values of higher layer parameter *codebookSubset;*
    - 4 or 6 bits according to Table 7.3.1.1.2-2B for 4 antenna ports, if *txConfig = codebook, ul-FullPowerTransmission = fullpowerMode1, maxRank=3 or 4,* transform precoder is disabled, and according to the values of higher layer parameter *codebookSubset;*
    - 2, 4, or 5 bits according to Table 7.3.1.1.2-3 for 4 antenna ports, if *txConfig = codebook, ul-FullPowerTransmission* is not configured or configured to *fullpowerMode2* or configured to *fullpower,* and according to whether transform precoder is enabled or disabled, and the values of higher layer parameters *maxRank,* and *codebookSubset;*
    - 3 or 4 bits according to Table 7.3.1.1.2-3A for 4 antenna ports, if *txConfig = codebook, ul-FullPowerTransmission = fullpowerMode1, maxRank=1,* and according to whether transform precoder is enabled or disabled, and the values of higher layer parameter *codebookSubset;*
    - 2 or 4 bits according to Table7.3.1.1.2-4 for 2 antenna ports, if *txConfig = codebook, ul-FullPowerTransmission* is not configured or configured to *fullpowerMode2* or configured to *fullpower,* transform precoder is disabled, and according to the values of higher layer parameters *maxRank* and *codebookSubset;*
    - 2 bits according to Table 7.3.1.1.2-4A for 2 antenna ports, if *txConfig = codebook, ul-FullPowerTransmission = fullpowerMode1,* transform precoder is disabled, *maxRank=2,* and *codebookSubset=nonCoherent;*
    - 1 or 3 bits according to Table7.3.1.1.2-5 for 2 antenna ports, if *txConfig = codebook, ul-FullPowerTransmission* is not configured or configured to *fullpowerMode2* or configured to *fullpower,* and according to whether transform precoder is enabled or disabled, and the values of higher layer parameters *maxRank* and *codebookSubset;*
    - 2 bits according to Table 7.3.1.1.2-5A for 2 antenna ports, if *txConfig = codebook, ul-FullPowerTransmission = fullpowerMode1, maxRank=1,* and according to whether transform precoder is enabled or disabled, and the values of higher layer parameter *codebookSubset;*

    For the higher layer parameter *txConfig=codebook,* if *ul-FullPowerTransmission* is configured to *fullpowerMode2,* maxRank is configured to be larger than 2, and at least one SRS resource with 4 antenna ports is configured in the SRS resource set indicated by SRS resource set indicator field if present, otherwise in an SRS resource set with usage set to 'codebook', and an SRS resource with 2 antenna ports is indicated via SRI in the same SRS resource set, then Table 7.3.1.1.2-4 is used.

    For the higher layer parameter *txConfig = codebook,* if different SRS resources with different number of antenna ports are configured, the bitwidth is determined according to the maximum number of ports in an SRS resource among the configured SRS resources in all SRS resource set(s) with usage set to 'codebook'. If the number of ports for a configured SRS resource in the set is less than the maximum number of ports in an SRS resource among the configured SRS resources, a number of most significant bits with value set to '0' are inserted to the field.

- Second Precoding information - number of bits determined by the following:
    - 0 bits if SRS resource set indicator field is not present;
    - 0 bits if the higher layer parameter *txConfig = nonCodeBook;*
    - 0 bits for 1 antenna port and if the higher layer parameter *txConfig = codebook;*

(continued)

| |
|---|
| - 3, 4, or 5 bits according to Table 7.3.1.1.2-2C with the same number of layers indicated by Precoding information and number of layers field for 4 antenna ports, if SRS resource set indicator field is present, *txConfig = codebook, ul-FullPowerTransmission* is not configured or configured to *fullpowerMode2* or configured to *fullpower,* transform precoder is disabled, and according to the values of higher layer parameters *maxRank,* and *codebookSubset;* <br><br> - 4 bits according to Table 7.3.1.1.2-2D with the same number of layers indicated by Precoding information and number of layers field for 4 antenna ports, if SRS resource set indicator field is present, *txConfig = codebook, ul-FullPowerTransmission = fullpowerMode1, maxRank=2,* transform precoder is disabled, and according to the values of higher layer parameter *codebookSubset;* <br><br> - 4 bits according to Table 7.3.1.1.2-2E with the same number of layers indicated by Precoding information and number of layers field for 4 antenna ports, if SRS resource set indicator field is present, *txConfig = codebook, ul-FullPowerTransmission = fullpowerMode1, maxRank=3 or 4,* transform precoder is disabled, and according to the values of higher layer parameter *codebookSubset;* <br><br> - 2, 4, or 5 bits according to Table 7.3.1.1.2-3 with the same number of layers indicated by Precoding information and number of layers field for 4 antenna ports, if SRS resource set indicator field is present, *txConfig = codebook, ul-FullPowerTransmission* is not configured or configured to *fullpowerMode2* or configured to *fullpower,* and according to whether transform precoder is enabled or disabled, and the values of higher layer parameters *maxRank,* and *codebookSubset;* <br><br> - 3 or 4 bits according to Table 7.3.1.1.2-3A with the same number of layers indicated by Precoding information and number of layers field for 4 antenna ports, if SRS resource set indicator field is present, *txConfig = codebook, ul-FullPowerTransmission = fullpowerMode1, maxRank=1,* and according to whether transform precoder is enabled or disabled, and the values of higher layer parameter *codebookSubset;* <br><br> - 1 or 3 bits according to Table7.3.1.1.2-4B with the same number of layers indicated by Precoding information and number of layers field for 2 antenna ports, if SRS resource set indicator field is present, *txConfig = codebook, ul-FullPowerTransmission* is not configured or configured to *fullpowerMode2* or configured to *fullpower,* transform precoder is disabled, and according to the values of higher layer parameters *maxRank* and *codebookSubset;* <br><br> - 2 bits according to Table 7.3.1.1.2-4C with the same number of layers indicated by Precoding information and number of layers field for 2 antenna ports, if SRS resource set indicator field is present, *txConfig = codebook, ul-FullPowerTransmission = fullpowerMode1,* transform precoder is disabled, *maxRank=2,* and *codebookSubset=nonCoherent;* <br><br> - 1 or 3 bits according to Table7.3.1.1.2-5 with the same number of layers indicated by Precoding information and number of layers field for 2 antenna ports, if SRS resource set indicator field is present, *txConfig = codebook, ul-FullPowerTransmission* is not configured or configured to *fullpowerMode2* or configured to *fullpower,* and according to whether transform precoder is enabled or disabled, and the values of higher layer parameters *maxRank* and *codebookSubset;* <br><br> - 2 bits according to Table 7.3.1.1.2-5A with the same number of layers indicated by Precoding information and number of layers field for 2 antenna ports, if SRS resource set indicator field is present, *txConfig = codebook, ul-FullPowerTransmission = fullpowerMode1, maxRank=1,* and according to whether transform precoder is enabled or disabled, and the values of higher layer parameter *codebookSubset;* <br><br> For the higher layer parameter *txConfig=codebook,* if *ul-FullPowerTransmission* is configured to *fullpowerMode2,* maxRank is configured to be larger than 2, and at least one SRS resource with 4 antenna ports is configured in the SRS resource set indicated by SRS resource set indicator field, and an SRS resource with 2 antenna ports is indicated via Second SRS resource indicator field in the same SRS resource set, then Table 7.3.1.1.2-4B is used. <br><br> For the higher layer parameter *txConfig = codebook,* if different SRS resources with different number of antenna ports are configured, the bitwidth is determined according to the maximum number of ports in an SRS resource among the configured SRS resources in the second SRS resource set with usage set to 'codebook' as defined in Table 7.3.1.1.2-36. If the number of ports for a configured SRS resource in the set is less than the maximum number of ports in an SRS resource among the configured SRS resources, a number of most significant bits with value set to '0' are inserted to the field. |

<'Precoding information and number of layers' field>

The corresponding field is required only for CB-based UL, especially when the number of ports of the indicated SRS resource is 2 or more, and transmit precoding matrix information (TPMI) and the number of layers are finally determined through the corresponding field.

For cells with CB-based UL scheduled via the same m-CC DCI, bits may be saved if there is a constraint that the number of layers may be the same between the cells. This corresponds to the same principle as that of saving up to 1 to 2 bits in the case of the 'Second Precoding information' field by having the same number of layers between two TRP transmissions. In this case, from among multiple scheduled cells scheduled through the same m-CC DCI, one specific cell is configured as a reference cell, and for the reference cell, the TPMI and number of layers are indicated through the required bits in the 'Precoding information and number of layers' field. For other scheduled cells except the reference cell, the TPMI and number of layers may be indicated through as many bits as necessary in the 'Second Precoding information' field.

A rule may be needed as to which of the multiple scheduled cells is designated as the reference cell. A rule for determining the reference cell may be predefined. For example, the reference cell may be a cell with the lowest index, a cell with the highest index, a cell with the lowest SCS set, a cell with the highest SCS set, a scheduling cell in which m-CC DCI is transmitted, a cell with the smallest maxRank value set, or a cell configured with the largest maxRank value. Alternatively, the reference cell may be defined and/or configured as a specific (one) cell within each scheduled cell combination based on a combination of cells scheduled by the m-CC DCI.

The constraint on the number of layers may only be applied to the m-CC scheduled cell, and there may be no constraint on the number of layers for the s-CC scheduling case. In this case, a number of fields equal to the number of cells scheduled through m-CC DCI (for which an operation is configured according to the corresponding DCI field instruction) are configured within the corresponding DCI. The field of the precoding information and number of layers may be configured in such a way that each scheduled cell corresponds to a separate field and a value indicated by the field is applied to the corresponding cell. This method of configuring fields is referred to as the "Type-2 field design method".

For cells configured with CB-based UL, the maximum number of rankes/layers may be configured/applied differently depending on the number of cells that m-CC DCI schedules (simultaneously). For example, in the s-CC scheduling case, even though the maxRank value follows a predefined/preconfigured value for each cell, the maxRank value may be constrained to K in the m-CC scheduling case. Alternatively, in the scheduling case based on m-CC DCI, the value of maxRank may always be constrained to K. Alternatively, a configuration constraint may be imposed such that the maxRank value is always configured to K for cells configured as an m-CC DCI scheduling target. The K value may be configured or predefined. For example, K=1. In this case, a number of fields equal to the number of cells scheduled through m-CC DCI (for which an operation is configured according to the corresponding DCI field instruction) are configured within the corresponding DCI. The field of the precoding information and number of layers may be configured in such a way that each scheduled cell corresponds to a separate field and a value indicated by the field is applied to the corresponding cell. This method of configuring fields is referred to as the "Type-2 field design method".

It may not be easy in practice to match the number of precoders or layers for each cell. When the number of layers is limited, there is a disadvantage in that a data rate decreases. In consideration of this, a separate table and separate fields corresponding to respective cells may be configured for each cell, and the TPMI and number of layers may be indicated for each cell through the separate fields. A method may be considered to reduce a total bits required for TPMI and layer number instructions by adjusting the number of rows in the table for each cell.

For example, for 4 antenna ports SRS (Precoding information and number of layers for 4 antenna ports) as shown in Table 9 below, when certain conditions (if transform precoder is disabled, maxRank = 2, and ul-FullPowerTransmission = fullpowerMode1, codebookSubset = partialAndNonCoherent) are satisfied, signaling is required for 30 combinations of TPMIs and number of layers. However, when the corresponding cell is scheduled through m-CC DCI, a table may include only some of the 30 rows corresponding to the 30 combinations. This allows reducing bits required to configure/indicate the 'Precoding information and number of layers' field/instruction for the corresponding cell. For example, when only 8 rows from among 30 are selected, only 3 bits instead of 5 bits are needed to indicate the TPMI and number of layers for the corresponding cell.

In this case, for each cell (in which CB-based UL is configured), only which row indices are selected from the existing codebook to reduce the codebook size may be configured separately or predefined. For example, only even row indices may be selected, only indices that are multiples of a specific N value may be selected, only a specific number of the lowest indices may be selected, or only a specific number of the highest indices may be selected.

The corresponding method may be applied differently depending on which cells are actually scheduled (the codebook size may be different) and may not be applicable to the s-CC scheduling case. For example, in the s-CC scheduling case, TPMI and layer number related fields/information are configured/indicated based on Table 9 below. In the m-CC scheduling case, TPMI and layer number related fields/information may configured/indicated based on only certain (e.g., 8) rows in Table 9 below. In this case, a number of fields equal to the number of cells scheduled through m-CC DCI (for which an operation is configured according to the corresponding DCI field instruction) are configured within the corresponding DCI. The field of the precoding information and number of layers may be configured in such a way that each scheduled cell corresponds to a separate field and a value indicated by the field is applied to the corresponding cell. This method of configuring fields is referred to as the "Type-2 field design method".

In a similar way, constraints on the codebookSubset parameter may reduce bits allocated to the corresponding field. For example, in cases scheduled with m-CC DCI, 1 bit of information may be saved by not allowing full-partial-and-non-coherent mode. Alternatively, the constraints on these codebookSubset parameters may not apply when the case is s-CC scheduled, but only in the m-CC scheduling case. In this case, a number of fields equal to the number of cells scheduled through m-CC DCI (for which an operation is configured according to the corresponding DCI field instruction) are configured within the corresponding DCI. The field of the precoding information and number of layers may be configured in such a way that each scheduled cell corresponds to a separate field and a value indicated by the field is applied to the corresponding cell. This method of configuring fields is referred to as the "Type-2 field design method".

Table 9 is Table 7.3.1.1.2-2A of the 3GPP TS 38.212 document, which shows a table used when 'Precoding information and number of layers for 4 antenna ports, if transform precoder is disabled, maxRank = 2, and ul-Full-PowerTransmission = fullpowerMode1'.

[Table 9]

| Bit field mapped to index | codebookSubset = partialAndNonCohe rent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 1 layer: TPMI=13 | 10 | 1 layer: TPMI=13 |
| 11 | 2 layer: TPMI=6 | 11 | 2 layer: TPMI=6 |
| 12 | 1 layer: TPMI=4 | 12-15 | Reserved |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30-31 | Reserved | | |

Options 4-1 to 4-3 disclose a method of applying the 'Precoding information and number of layers' field in a case in which a CC configured with NCB-based UL operation and a CC(s) configured with CB-based UL operation are grouped into a shared CC group, or a case in which the table configuration referred to by each CC is different even when a shared CC group is grouped only with CCs configured with CB-based UL operation.

First, the field itself is required only for CCs with CB-based UL operation set up, and thus when CC(s) configured with NCB-based UL operation are included in a shared CC group (and also in the case of CCs configured with CB-based UL operation and the number of ports of SRS resource is 1), the indication in the field may be disregarded for the CC(s).

(Opt 4-1) The number of code points required for each CB-based UL operation configured in the same shared CC group may be configured to be the same. For example, the TPMI field may be configured based on the minimum number of code points configured for single-cell scheduling for each CC. In this case, for a CC configured with more code points than the minimum value (e.g. N), only the code points corresponding to the lowest or highest N indices may be indicated.

(Opt 4-2) Alternatively, the TPMI field may be configured based on the maximum number of code points configured for single-cell scheduling for each CC. When the code point indicated through that field is not valid for a particular CC, no scheduling is considered for the corresponding CC.

(Opt 4-3) The TPMI field is configured in the same manner as Opt 4-3 above, but if the indicated code point is not valid for a specific CC, the UE may operate to assume/apply a specific code point predefined/configured for the corresponding CC.

<'Second Precoding information' field>

The corresponding field is activated only when the SRS resource set indicator field indicates that the second SRS resource set is valid, otherwise it is considered reserved.

The corresponding field may not exist in m-CC DCI. Alternatively, the corresponding field may exist only in the s-CC scheduling case and not in the m-CC scheduling case. Even in the s-CC scheduling case, if multi-TRP UL operation is not configured for the corresponding scheduled cell, the corresponding field may be defined not to exist. For example, the Second Precoding information field may be present when scheduling is performed only for cells configured with multi-TRP UL operation and in the s-CC scheduling case.

Alternatively, when the second SRS resource set is indicated to be valid on a cell scheduled through an m-CC scheduling case or an s-CC scheduling case (by the above method) but the field does not exist, the TPMI/layer number corresponding to which code point is to be applied for the cell may be predefined/configured or updated through a MAC CE. As one method, the UE may consider that the same number of TPMI/layers is indicated (for the corresponding cell) via the 'Precoding information and number of layers' field. Alternatively, which TPMI/layer number is to be applied to the second SRS resource set may be preconfigured/defined.

Options 5-1 and 5-2 propose a method of applying the 'Second Precoding information' field when CCs configured with and without multi-TRP UL operation are grouped into a shared CC group.

(Opt 5-1) When a CC configured with multi-TRP UL and a CC configured without multi-TRP UL are grouped into a shared CC group, the 'Second Precoding information' field configuration is omitted, and the (Precoding related) operation of the CC configured with multi-TRP UL operation may be predefined or indicated by MAC CE, or a value indicated through the 'Precoding information and number of layers' field may also be applied to the second TRP.

(Opt 5-2) The 'Second Precoding information' field is present or configured, but is disregarded for CCs for which multi-TRP UL operation is not configured.

[3] 'Transmission configuration indication' field

Table 10 shows a transmission configuration indication (TCI) field disclosed in the 3GPP TS 38.212 document.

[Table 10]

| |
|---|
| - Transmission configuration indication - 0 bit if higher layer parameter *tci-PresentInDCI* is not enabled; otherwise 3 bits as defined in Clause 5.1.5 of [6, TS38.214].<br>If "Bandwidth part indicator" field indicates a bandwidth part other than the active bandwidth part,<br>    - if the higher layer parameter *tci-PresentInDCI* is not enabled for the CORESET used for the PDCCH carrying the DCI format 1_1,<br>        - the UE assumes *tci-PresentInDCI* is not enabled for all CORESETs in the indicated bandwidth part;<br>    - otherwise,<br>        - the UE assumes *tci-PresentInDCI* is enabled for all CORESETs in the indicated bandwidth part. |

Depending on a cell-specific configuration, an instruction for the TCI state may be configured in one of two modes as follows.

TCI mode #1: TCI (or spatial relation RS and/or path-loss setting RS in case of UL) is separately configured for each cell (or BWP) by higher layer signaling. The higher layer signaling may be, for example, RRC signaling.

TCI mode #2: A list of cells (e.g., CC#1/2) sharing TCI (or spatial relation RS and/or path-loss setting RS in case of UL) is configured via higher layer signaling. When a TCI state of one of the cells (e.g., CC#1) changes, the states of other cells (e.g., CC#2) belonging to the list of cells also change commonly. The higher layer signaling may be, for example, RRC signaling.

As one method of reducing the size of the TCI field, an independent TCI field may be configured for each cell to be (simultaneously) scheduled via m-CC DCI, and bits of the TCI field configured for each cell may be less than 3 bits. For example, when CC#1 and CC#2 are to be scheduled through m-CC DCI, 2 bits of the TCI field corresponding to CC#1 and 2 bits of the TCI field corresponding to CC#2 may be separately configured, and thus the TCI field in the DCI may be configured with a total of 4 bits.

In this case, the TCI states corresponding to the four code points for CC#1 and the four code points for CC#2 may be configured/indicated separately from the case scheduled with s-CC DCI. Alternatively, the TCI states corresponding to the four code points for CC#1 and the four code points for CC#2 may be preconfigured as some of the TCI states pre-configured/indicated for the case scheduled with s-CC DCI, or defined by some code points with specific rules. For example, in a case scheduled with s-CC DCI, the TCI states corresponding to the code point with the lowest or highest index from among the TCI states configured/indicated may be inherited (or used). In detail, when a 2-bit TCI field is configured per cell, TCI states corresponding to code points 0 to 3 may be used. Alternatively, TCI states corresponding to some code points with indices that are multiples of a specific N value may be inherited (or used).

A method in which an independent TCI field is configured for each cell to be (simultaneously) scheduled via m-CC DCI, and bits of the TCI field configured for each cell is configured to less than 3 bits, may be referred to as a "separate reduced table."

When all cells schedulable via m-CC DCI are configured to operate in TCI mode #2 and are provided in a cell list, only a common (single) TCI field may be configured without configuring a separate TCI field for each cell. Alternatively, when all schedulable cells via m-CC DCI (e.g., CC #1/2/3/4) are configured to operate in TCI mode #2 but are not included in a common cell list (case 1: CC#1/2 belong to cell list #1, but CC#3/4 belong to cell list #2) or have different TCI modes set for each cell (case 2: CC#1/2 belong to cell list #1, but CC#3 and CC#4 have TCI mode #1 set), a separate TCI field may be configured for each cell and/or per cell list. For Case 1, one common TCI field/information may be configured/indicated for CC#1/2 and another common TCI field/information may be configured/indicated for CC#3/4. In this case, a total of two TCI fields are configured. For Case 2, one common TCI field/information is configured/indicated for CC#1/2, and separate TCI fields are configured for CC#3 and CC#4 respectively. In this case, a total of three TCI fields may be configured. Only a common TCI field may be configured between cells included in a common cell list, and when an independent TCI field is configured for each cell (or each cell list), bits allocated for each cell (or each cell list) may be configured to less than 3 bits (in the same manner as above).

As another method of reducing the size of the corresponding TCI field, one TCI field that is commonly used for cells to be (simultaneously) scheduled via m-CC DCI may be configured, and TCI states for each CC may be linked for one code point indicated by the corresponding TCI field. In other words, a combination of multiple TCI states for multiple cells may be configured for a single code point. For example, when CC#1 and CC#2 are scheduled via m-CC DCI, one TCI field is configured for CC#1 and CC#2. A combination of multiple TCI states corresponding to both CCs for each code point may be indicated by a single TCI field. For example, TCI state #1 for CC#1 and TCI state #2 for CC#2 may be configured/indicated simultaneously via code point 0. In this case, the TCI states corresponding to each code point of one TCI field for CC#1 and CC#2 may be configured/indicated separately from the case scheduled with s-CC DCI. A method in which TCI states for each CC are linked for a single code point indicated by a single TCI field may be referred to as "code point extension".

When all cells to be (simultaneously) scheduled via m-CC DCI are configured to operate in TCI mode #2 and are included in the cell list, instead of linking TCI states for each CC to one code point, only one TCI state to be commonly applied to multiple cells may be linked. Alternatively, when all schedulable cells via m-CC DCI (e.g., CC #1/2/3/4) are configured to operate in TCI mode #2 but are not included in a common cell list (case A: CC#1/2 belong to cell list #1, but CC#3/4 belong to cell list #2) or have different TCI modes set for each cell (case B: CC#1/2 belong to cell list #1, but CC#3 and CC#4 have TCI mode #1 set), a code point linked with separate TCI states may be configured for each cell and/or per cell list. For Case A, the TCI state for CC#1/2 and the TCI state for CC#3/4 are linked together in one code point, and the TCI field includes the code points. For Case B, the TCI state for CC#1/2, the TCI state for CC#3, and the TCI state for CC#4 are linked together in one code point, and the TCI field may include the code points. For cells included in a common cell list, only one TCI state to be commonly applied to the corresponding cells may be linked to one code point.

Based on the proposed methods, the following configuration may be possible (for cells scheduled via the same m-CC DCI).

- Between cells where TCI mode #1 is configured, the separate reduced table method or the code point extension method (based on a single field) may be applied.
- Between different cell lists configured with TCI mode #2, either a separate reduced table method (based on configuring one (common) TCI table per cell list) or a code point extension method (based on configuring one (common) TCI state per cell list) may be applied.
- When a cell configured with TCI mode #1 and a cell configured with TCI mode #2 are scheduled simultaneously, the methods may be applied to each TCI mode. Alternatively, in this case, the code point extension method may be applied to all cells. In this case, for cells configured with TCI mode #2, one (common) TCI state may be configured per cell list.

The proposed methods may be applied only to the m-CC scheduling case, and in the s-CC scheduling case, TCI information may be exceptionally indicated based on the TCI field configured for s-CC DCI (and the linked TCI state for each code point).

Options 6-1 to 6-3 propose a method of applying the TCI field when CCs configured with the TCI field and CC(s) configured without the TCI field are grouped into a shared CC group.

(Opt 6-1) When a CC configured with a TCI field and a CC configured without a set TCI field are grouped into a shared CC group, the TCI field configuration in the m-CC DCI (for the shared CC group) is omitted and a specific default TCI is always assumed/applied.

(Opt 6-2) When a TCI field is configured in the m-CC DCI and a specific code point or index (e.g., 0 or state 0) is indicated, a specific default TCI is assumed/applied for the unconfigured CC. When a code point other than the specified code point is indicated, the UE considers that there is no scheduling for the unconfigured CC.

(Opt 6-3) A TCI field is configured in the m-CC DCI, and a specific default TCI is applied to the non-configured CC.

Here, a specific default TCI may be a specific index (preconfigured/defined or indicated via MAC CE) from among the TCI state IDs configured (for single-cell scheduling of the corresponding CC). Alternatively, a specific default TCI may be the TCI information corresponding to a specific CORESET (e.g., the lowest index CORESET of the latest slot from the indicated data).

Options 7-1 and 7-2 are proposed for the TCI field application method in the case in which CCs configured with the TCI field are grouped into a shared CC group, but the TCI modes are configured differently between each CC (CCs configured with TCI mode #1 and CCs configured with TCI mode #2 are grouped into a shared CC group).

Unlike options 7-1 and 7-2, a configuration constraint may be imposed such that only CCs configured with the same TCI mode belong to the same shared CC group. In particular, when a shared CC group is grouped only with CCs configured with TCI mode#2, a configuration restriction may be imposed such that only CCs belonging to the same cell list belong to the group.

(Opt 7-1) When CCs configured with different TCI modes (CCs configured with the same TCI mode#2 but belonging to different lists) belong to one shared CC group, the TCI field configuration in the m-CC DCI may be omitted, and the specific default TCI may be assumed/applied for each CC.

(Opt 7-2) TCI fields/tables for a specific CC (e.g., a CC configured with TCI mode#2) may be configured. The specific default TCI may be applied to other CCs (e.g., CCs configured with TCI mode#1). Here, a specific default TCI may be a specific index (preconfigured/defined or indicated via MAC CE) from among the TCI state IDs configured (for single-cell scheduling of the corresponding CC). Alternatively, a specific default TCI may be the TCI information corresponding to a specific CORESET (e.g., the lowest index CORESET of the latest slot from the indicated data).

When the TCI field in the existing s-CC DCI is configured, 3 bits are allocated, and a mapping relationship between each code point and TCI status index(es) may be be updated through MAC CE. However, when the TCI field in the m-CC DCI is configured by the code point extension method (based on a single field), it may be difficult to simply update through the existing MAC CE. As a method of resolving this,

- Alt-1: A mapping relationship between each code point of the TCI field in m-CC DCI and the TCI state index(es) for multiple cells may be restricted to be updated only by RRC signaling (or RRC reconfiguration) and not through MAC CE (for s-CC DCI). For example, only TCI states connected to s-CC DCI may be updated through existing (e.g. Rel-15/16/17) MAC CE, while TCI states connected to m-CC DCI may not be updated.

- Alt-2: A mapping relationship between each code point of the TCI field in m-CC DCI and the TCI state index(es) for multiple cells may be updated via MAC CE (for s-CC DCI), and rules and/or constraints on the update method may be defined. As one method, only a number of TCI status indices equal to (or less than) the number of TCI status indices configured in the TCI field of the m-CC DCI for a particular CC may be updated via MAC CE. For example, in a table for TCI field in m-CC DCI as in Table 11 below, a constraint of (maximum) 3 (1) TCI updates via MAC CE for CC1 (or CC3) may be imposed. If it is signaled through MAC CE for the CC1 that the list of TCI indices is updated from {1,2,3} to {2,3,4}, the UE may recognize that the code point mapping for CC1 in Table 11 is updated to {2 for '00', 3 for '01', 3 for '10', 4 for '11'}. If it is signaled through MAC CE for the corresponding CC3 that the list of TCI indices is updated from {4} to {1}, the UE may recognize that the code point mapping for CC3 in Table 11 is updated to {1 for '00'/'01'/'10'/'11'}.

As another example, in the table for the TCI field in m-CC DCI as in Table 11, a constraint of 3 or less may be imposed for TCI update via MAC CE for CC1. If it is signaled through MAC CE for the CC1 that the list of TCI indices is updated from {1,2,3} to {3,4}, the UE may recognize that the code point mapping for CC1 in Table 11 is updated to {3 for '00', 4 for '01', 4 for '10', 3 for '11'}. That is, when a previous TCI state includes N TCI state indices {T_old.0, ... T_old.N-1}, and a latest TCI state includes K TCI state indices {T_new.0, ... T_new.K-1}, and $N > K$, the UE may recognize that the previous N TCI states (corresponding code-points) are replaced/updated/mapped with the latest N TCI state indices. For example, the TCI state index may be updated to {T_new.0, ... T_new.K-1, T_new.0, ... } based on modulo-K operations. Alternatively, the TCI state index may be updated to {T_new.0, ... T_new.K-1, T_new.K-1, T_new.K-1, ... }, where the last T_new.K-1 is repeated thereafter.

[Table 11]

| Code-point of TCI field for m-CC DCI | TCI state index for CC1 | TCI state index for CC2 | TCI state index for CC3 | TCI state index for CC4 |
|---|---|---|---|---|
| 00 | 1 | 2 | 4 | 5 |
| 01 | 2 | 5 | 4 | 7 |
| 10 | 2 | 6 | 4 | 7 |
| 11 | 3 | 6 | 4 | 7 |

[0167]　- Alt-3: A mapping relationship between each code point of the TCI field in m-CC DCI and the TCI state index(es) may be defined by a separate MAC CE (for m-CC DCI) to update the relationship, or the existing MAC CE (for s-CC DCI) may be extended. TCI state index(es) per code point of the TCI field (in m-CC DCI) for a specific CC may be indicated through a separate MAC CE or an existing MAC CE. For example, in the case of CC1 in Table 11 above, it may be signaled that the TCI state index(es) per code point of the TCI field (in m-CC DCI) for CC1 is updated from {1, 2, 2, 3} to {2, 2, 4, 5} through a separate MAC CE or an existing MAC CE. Alternatively, CC-specific TCI state index(es) corresponding to specific codepoints in the TCI field (in m-CC DCI) may be indicated via a separate MAC CE. For example, for code-point#01 in Table 11 above, it may be signaled via a separate MAC CE that the CC-specific TCI state index(es) are updated from {1, 2, 4, 5} to {2, 3, 3, 4}.

The contents of the present disclosure are not limited to transmission and reception of uplink and/or downlink signals. For example, the contents of the present disclosure may also be used in direct communication between UEs. A BS according to the present disclosure may be a concept that includes not only a BS but also a relay node. For example, an operation of the BS according to the present disclosure may be performed by the BS but may also be performed by a relay node.

It is obvious that examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. Information on whether the proposed methods are applicable (or information on the rules of the proposed methods) may be defined by a rule such that a BS notifies the UE or a transmitting UE notifies a receiving UE through a predefined signal (e.g., a physical layer signal or a higher layer signal).

Implementation example

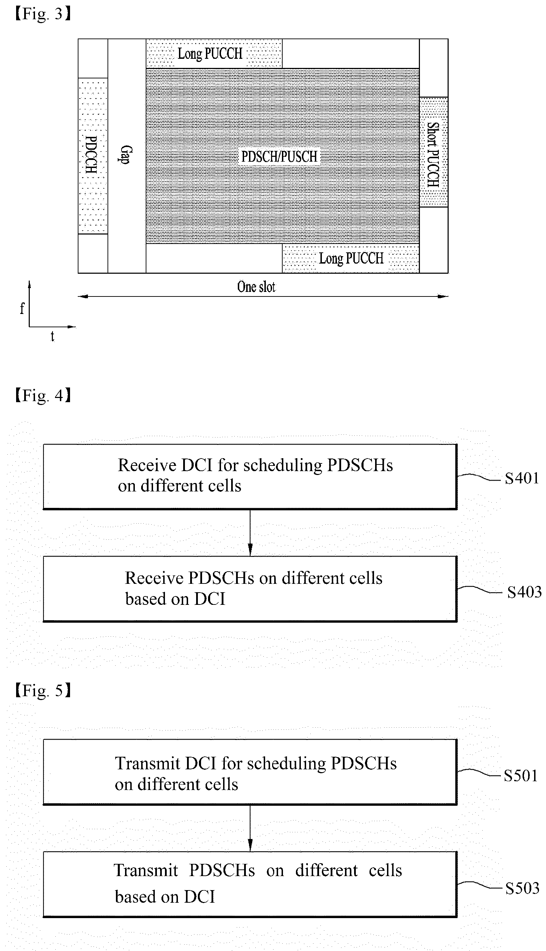

FIG. 4 and FIG. 5 are flowcharts of a signal transmission and reception method according to embodiments of the present disclosure.

Referring to FIG. 4, the method according to an embodiment of the present disclosure may be performed by a UE and may include receiving DCI for scheduling PDSCHs on different cells (S401) and receiving PDSCHs on the different cells based on the DCI (S403).

Referring to FIG. 5, the method according to another embodiment of the present disclosure may be performed by a BS and may include transmitting DCI for scheduling PDSCHs on different cells (S501) and transmitting PDSCHs on the different cells based on the DCI (S503).

In addition to the operations of FIG. 4 and/or FIG. 5, one or more of the operations described in 'DCI for scheduling PDSCHs or PUSCHs on multiple serving cells' and sections [1] to [3] may be additionally performed.

For example, referring to section [3], DCI for scheduling PDSCHs on different cells may include a TCI field. The TCI field may be configured by the 'code point extension' method. When the TCI field is configured by the code point extension method, a common TCI table is configured for cells belonging to the same cell list from among different cells in which TCI mode #2 is configured, and thus the DCI includes one TCI field for one cell list. The cell list may include a collection of multiple cells, and may be expressed as a group, a cell group, or a sub-group. In other words, DCI contains one TCI field for cells belonging to the same group from among different cells.

According to the code point extension method, a combination of multiple TCI states for multiple cells is configured for the code point of one TCI field. For example, when CC#1 and CC#2 are scheduled via m-CC DCI, one TCI field is configured for CC#1 and CC#2. A combination of multiple TCI states corresponding to both CCs may be indicated by a single code point value of one TCI field. Even when three or more CCs are scheduled through a single DCI, if the three or more CCs belong to the same cell list (or cell group), one code point value of one TCI field included in the single DCI indicates a combination of multiple TCI states corresponding to all of the three or more CCs. The mapping relationship between code points and TCI states may be established by TCI States Activation/Deactivation for UE-specific PDSCH MAC CE (MAC CE). In general, one code point of one TCI field included in DCI for scheduling PDSCHs on different cells is mapped to a number of TCI states equal to the number of cells belonging to one group.

According to the code point extension method, when all cells schedulable through m-CC DCI are configured to operate in TCI mode #2 and are included in the cell list, m-CC DCI includes only one TCI field. All schedulable cells via m-CC DCI are configured to operate in TCI mode #2, but if the cells are included in different cell lists, different TCI fields are configured for each cell list. Therefore, if the different cells scheduled by the DCI belong to different cell lists, the DCI contains one TCI field per cell list. If there are two cell lists (cell groups), the DCI includes a first TCI field for the first cell group and a second TCI field for the second cell group. Therefore, one code point of the first TCI field is mapped to a number of TCI states equal to the number of cells belonging to the first group, and one second code point of the second TCI field is mapped to a number of TCI states equal to the number of cells belonging to the second group.

According to the code point extension method, if cells to be scheduled through m-CC DCI have different TCI modes configured for each cell, different TCI fields are configured for each TCI mode. Therefore, if some of the different cells scheduled by the DCI are configured to TCI mode #2 and belong to one cell list, and one or more specific cells are configured to TCI mode #1 and do not belong to the cell list, the DCI includes one first TCI field for the cells belonging to the first group and one second TCI field per specific cell. One code point of the first TCI field is mapped to a number of TCI states equal to the number of cells belonging to the first group, and one second code point of the second TCI field is mapped to one TCI state.

Therefore, if cells scheduled through m-CC DCI include cells belonging to different cell lists configured to TCI mode #2 and multiple cells configured to TCI mode #1, m-CC DCI includes TCI fields as many as the number of cell lists plus the number of cells configured to TCI mode #1.

The TCI mode is configured based on higher layer signaling, and thus a specific cell is configured not to belong to any cell list (cell group) based on higher layer signaling. Cells belonging to a specific cell list are also configured based on higher layer signaling.

The code point expansion method may be applied only to the m-CC scheduling case and may not be applied to the s-CC scheduling case. Accordingly, when only one PDSCH is scheduled by DCI for scheduling PDSCHs on different cells, the codepoint extension method is not used, and the m-CC DCI includes one TCI field configured for the s-CC DCI. When multiple cells are scheduled by m-CC DCI, the TCI field is the first TCI field, and when one cell is scheduled by m-CC DCI, the m-CC DCI includes a second TCI field separated from the first TCI field. One code point of the first TCI field is mapped to a number of TCI states for m-CC DCI equal to the number of cells belonging to the first group, and one second code point of the second TCI field is mapped to one TCI state for one s-CC DCI.

The DCI format of DCI for scheduling PDSCHs on different cells may be referred to as DCI format 1_X, where X may be a natural number greater than or equal to 3. For example, the DCI format of DCI for scheduling PDSCHs on different cells may be DCI format 1_3.

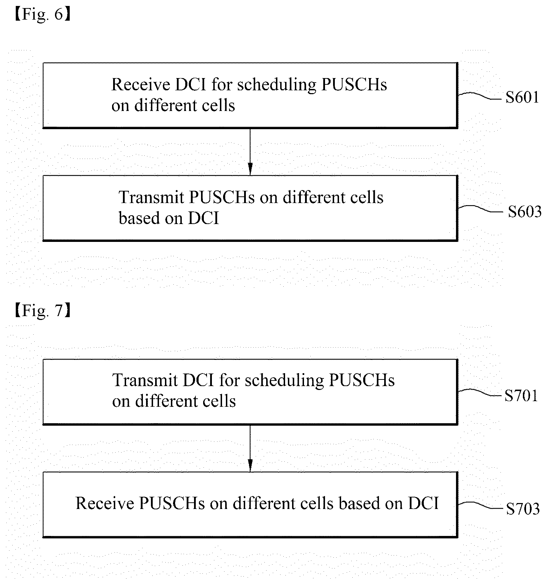

FIG. 6 and FIG. 7 are flowcharts of a signal transmission and reception method according to other embodiments of the present disclosure.

Referring to FIG. 6, the method according to an embodiment of the present disclosure may be performed by a UE and may include receiving DCI for scheduling PUSCHs on different cells (S601) and transmitting PUSCHs on the different cells based on the DCI (S603).

Referring to FIG. 7, the method according to another embodiment of the present disclosure may be performed by a BS and may include transmitting DCI for scheduling PUSCHs on different cells (S701) and receiving PUSCHs on the different cells based on the DCI (S703).

In addition to the operations of FIG. 6 and/or FIG. 7, one or more of the operations described in 'DCI for scheduling PDSCHs or PUSCHs on multiple serving cells' and sections [1] to [3] may be additionally performed.

For example, DCI for scheduling PUSCHs on different cells may include one or more fields of SRS resource set indicator, SRS resource indicator, Second SRS resource indicator, Precoding information and number of layers, and Second Precoding information.

Each DCI field may be configured based on a combination of one or more of the methods disclosed in sections [1] and [2].

In detail, referring to section [2], CCs belonging to the same shared CC group may also have different table configurations that the CCs refer to. In this case, when Opt 4-2 is applied, one TPMI field for the shared CC group is configured based on the maximum number of code points configured for DCI for single cell scheduling (scheduling of PUSCH within one cell). The TPMI field refers to a field of 'precoding information and number of layers' for indicating TPMI. TPMI is used to determine the transmission precoder when the UE transmits a PUSCH. The number of code points is related to the number of bits in the field of the precoding information and number of layers. When the number of code points is N, the number of bits in the field of the precoding information and number of layers is determined by ceil $\{\log_2(N)\}$. Therefore, the number of bits of the field of 'precoding information for single cell scheduling and number of layers (field of the second precoding information and number of layers)' for each of the first cells is determined based on the number of code points set for single cell scheduling for each cell.

In summary, one field of the precoding information and number of layers are included for the first cells belonging to the same shared CC group (the first group) from among the different cells to be scheduled by m-CC DCI. Each PUSCH of first cells is transmitted based on a transmission precoder determined by the TPMI for each first cell. The TPMI for each of the first cells is given by one field of the precoding information and number of layers for the first group. The number of bits in one field of the precoding information and number of layers is determined based on the maximum value from among the number of bits in the one field of precoding information and number of layers configured for single cell scheduling for each first cell. One field of the precoding information and number of layers for the first group may also indicate the number of layers for each of the first cells.

The number of code points for each first cell is determined based on the number of row indices of the table configured for single cell scheduling for each first cell. Referring to Table 8 and Table 9, the table for single cell scheduling is determined based on the number of antenna ports, codebook-based transmission, full power transmission mode, transform precoder, maximum rank, and codebook subset. Therefore, the number of bits for each field of the second precoding information and number of layers of the first cells is determined based on the number of antenna ports configured for single cell scheduling in each of the first cells, codebook-based transmission, full power transmission mode, transform precoder, maximum rank, and codebook subset.

For reference, the number of antenna ports may be 1, 2 or 4. Codebook-based transmission may refer to whether the UE uses codebook based or non-codebook based transmission and may be determined based on the RRC parameter txConfig. If the txConfig parameter is not present, the UE transmits a PUSCH on one antenna port. Full power transmission mode refers to whether UL full power transmission mode is configured in the UE and is configured based on the RRC parameter ul-FullPowerTransmission. In detail, the ul-FullPowerTransmission parameter includes three mode settings including fullpower, fullpowerMode1, and fullpowerMode2, and the specific operation for each mode follows the operation in Section 7.1 of the 3GPP TS 38.213 document. The transform precoder may be a UE specific selection of transformer precoder for PUSCH and determined based on the RRC parameter transformPrecoder. If the transformPrecoder parameter is not present, the UE may use the transform precoder value of Msg3 used during the random access process. The maximum rank may be a subset of precoding matrix indicators (PMIs) addressed by transmission rank indicators (TRIs) and configured to a value from 1 to 4 by the RRC parameter maxRank. A codebook subset is a subset of PMIs addressed by TPMI, and is set to one of the values fullyAndPartialAndNonCoherent, partialAndNonCoherent, or nonCoherent by the RRC parameter codebookSubset.

In other words, the field of the precoding information and number of layers is determined as the maximum value from among the M bits associated with N different cells when the field is configured to Type 1A. or N cells, the M bits per cell are determined based on the number of antenna ports, codebook-based transmission, full power transmission mode, transform precoder, maximum rank, and codebook subset.

A table configured independently for each of the first cells is used, and thus even if the same row index is indicated in each table by one value of one field of the precoding information and number of layers, the TPMI value corresponding to the row index of each table is an independent value for each cell.

Here, the field of the precoding information and number of layers are configured based on the maximum number of bits from among the field of the second precoding information and number of layers, and thus there may be a case in which there is no row index corresponding to a specific value of the field of the precoding information and number of layers for a specific cell. According to Opt 4-2, for a specific cell that does not have a TPMI value corresponding to one of the values in the field of the precoding information and number of layers, the UE may consider that the PUSCH is not scheduled. Alternatively, according to Opt 4-3, for a specific cell that does not have a TPMI value corresponding to a value of the field of the precoding information and number of layers, the UE may transmit a PUSCH based on a predefined specific TPMI value.

The field of the precoding information and number of layers is configured to one per shared CC group, and thus for the second cells belonging to the second group, not the first group, from among the different cells to be scheduled by the DCI, the field of the precoding information and number of layers separated from the field of the precoding information and number of layers for the first group (field of third precoding information and number of layers) may be included in the DCI.

A shared CC group may include a CC configured with CB-based UL operation and a CC configured with NCB-based UL operation, and the UE disregards the field of the precoding information and number of layers for the CC configured with NCB-based UL operation. Therefore, when non-codebook based transmission is configured for the PUSCH of a specific cell from among the first cells, the UE transmits the PUSCH on the specific cell without using the values of the field of the precoding information and number of layers.

Referring to section [1], the UE may transmit PUSCHs on different cells based on the SRS resource set(s) configured per cell. When multiple SRS resource sets are configured for a specific cell, the UE may transmit a PUSCH on the specific cell based on the resource configured with the highest or lowest index from among the SRS resource sets configured for the specific cell.

Referring to Opt 2-1 to 2-3, one SRI field is included for the first cells belonging to the same shared CC group (first group) from among the different cells schedulable by m-CC DCI. The number of bits in one SRI field is determined based on the maximum value from among he number of bits in the SRI field configured for single-cell scheduling for each first cell.

In other words, the SRI field is determined as the maximum value from among the M bits associated with N different cells when the field is configured to Type 1A. Referring to Table 6, for N cells, the M bits for each cell are configured based on (i) the number of configured SRS resources, N_SRS, and (ii) L_max, the maximum MIMO layer to be used for PUSCH in all BWPs of the corresponding UL of this serving cell, when the cell is configured with NCB-based UL (txConfig=nonCodebook). For N cells, the M bits for each cell are determined based on the number of configured SRS resources, N_SRS, when the cell is configured for CB-based UL (txConfig=Codebook). When multiple SRS resource sets are configured in one cell, a first SRS resource set having a lower index may be used, and thus the number of set SRS resources N_SRS may be the number of SRS resources configured in the first SRS resource set from among the first SRS resource set and the second SRS resource set.

The DCI format of DCI for scheduling PUSCHs on different cells may be referred to as DCI format 0_X, where X may be a natural number greater than or equal to 3. For example, the DCI format of DCI for scheduling PUSCHs on different cells may be DCI format 0_3.

In addition to the operations described with respect to FIGS. 4 to 7, one or more of the operations described with respect to FIGS. 1 to 3 and/or the operations described in 'DCI for scheduling PDSCHs or PUSCHs on multiple serving cells' and sections [1] to [3] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

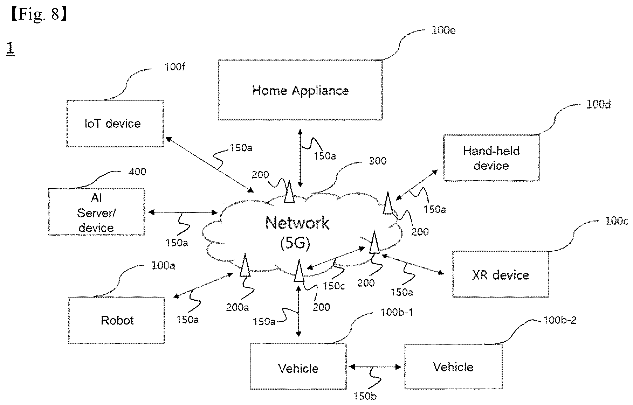

FIG. 8 illustrates a communication system 1 applied to the present disclosure.

Referring to FIG. 8, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

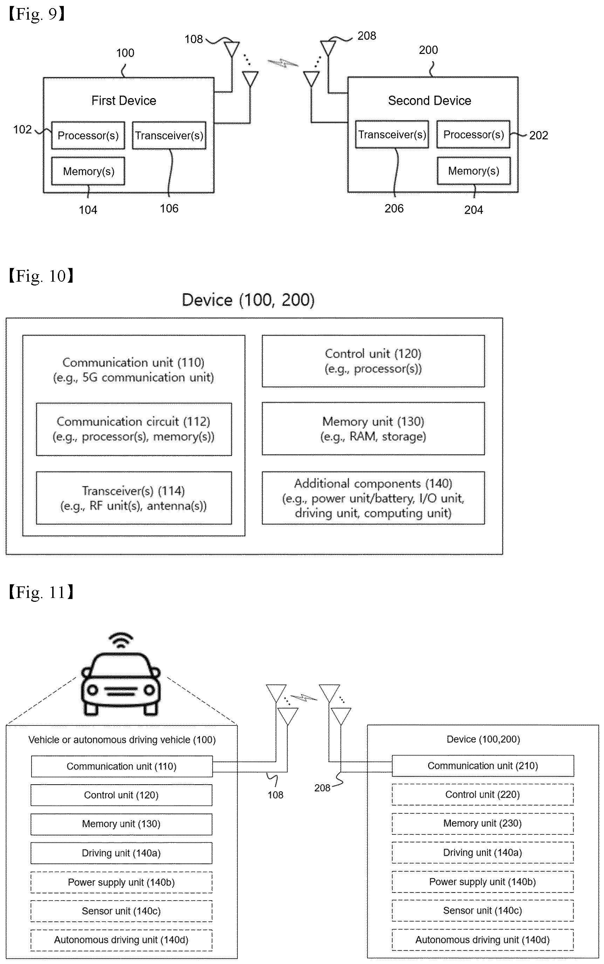

FIG. 9 illustrates wireless devices applicable to the present disclosure.

Referring to FIG. 9, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 10 illustrates another example of a wireless device applied to the present disclosure. The wireless device may be implemented in various forms according to a use case/service (refer to FIG. 8).

Referring to FIG. 10, wireless devices 100 and 200 may correspond to the wireless devices 100 and 200 of FIG. 9 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcasting terminal, a hologram device, a public safety device, an MTC device, a medical device, a FinTech device (or a finance device), a security device, a climate/environment device, the AI server/device (400 of FIG. 8), the BSs (200 of FIG. 8), a network node, or the like. The wireless device may be mobile or fixed according to a use case/service.

In FIG. 10, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 11 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

**1.** A method of transmitting a signal by a user equipment (UE) in a wireless communication system, the method comprising:

receiving downlink control information (DCI) for scheduling physical downlink shared channels (PUSCHs) on different cells; and
transmitting the PUSCHs on the different cells based on the DCI,
wherein the DCI includes a field of precoding information and number of layers for first cells belonging to a first group from among the different cells,
wherein each PUSCH of the first cells is transmitted based on a transmit precoding matrix indicator (TPMI) for each of the first cells, and the TPMI for each of the first cells is determined based on the field of the precoding information and number of layers,
wherein one field of second precoding information and number of layers for each of the first cells is configured for DCI for scheduling a PUSCH within one cell, and
wherein bits in the field of the precoding information and number of layers are determined based on a maximum value from among the bits in the configured field of the second precoding information and number of layers.

2. The method of claim 1, wherein the bits of the second precoding information and number of layers is determined based on a number of antenna ports, codebook-based transmission, a full power transmission mode, a transform precoder, maxRank, and codebookSubset.

3. The method of claim 1, wherein a number of layers for each of the first cells is determined based on the field of the precoding information and number of layers.

4. The method of claim 1, wherein one value of the field of the precoding information and number of layers corresponds to a TPMI value independently configured for each of the first cells.

5. The method of claim 4, wherein, based on that there is no TPMI value corresponding to the one value for a specific cell from among the first cells, a PUSCH for the specific cell is considered as not scheduled.

6. The method of claim 4, wherein, based on that, there is no TPMI value corresponding to the one value for a specific cell from among the first cells, a PUSCH for the specific cell is transmitted based on a predefined specific TPMI value.

7. The method of claim 1, wherein the DCI includes a field of third precoding information and number of layers for second cells belonging to a second group among the different cells separated from the field of the precoding information and number of layers from the first group.

8. The method of claim 1, wherein, based on non-codebook based transmission being configured for a PUSCH of a specific cell from among the first cells, the field of the precoding information and number of layers is disregarded for the PUSCH of the specific cell.

9. The method of claim 1, wherein, based on a plurality of SRS resource sets being configured for a specific cell from among the first cells, the PUSCH of the specific cell is transmitted based on an SRS resource set having a highest index from among the plurality of SRS resource sets.

10. The method of claim 1, wherein, based on a plurality of SRS resource sets being configured for a specific cell from among the first cells, the PUSCH of the specific cell is transmitted based on an SRS resource set having a lowest index from among the plurality of SRS resource sets.

11. A user equipment (UE) for receiving a signal in a wireless communication system, the UE comprising:

at least one transceiver;
at least one processor; and
at least one memory operatively connected to the at least one processor and configured to store instructions that when executed cause the at least one processor to perform a specific operation including:

receiving downlink control information (DCI) for scheduling physical downlink shared channels (PUSCHs) on different cells; and
transmitting the PUSCHs on the different cells based on the DCI,
wherein the DCI includes a field of precoding information and number of layers for first cells belonging to a first group from among the different cells,

wherein each PUSCH of the first cells is transmitted based on a transmit precoding matrix indicator (TPMI) for each of the first cells, and the TPMI for each of the first cells is determined based on the field of the precoding information and number of layers,

wherein one field of second precoding information and number of layers for each of the first cells is configured for DCI for scheduling a PUSCH within one cell, and

wherein bits in the field of the precoding information and number of layers are determined based on a maximum value from among the bits in the configured field of the second precoding information and number of layers.

12. An apparatus for a user equipment (UE), the apparatus comprising:

at least one processor; and

receiving downlink control information (DCI) for scheduling physical downlink shared channels (PUSCHs) on different cells; and

transmitting the PUSCHs on the different cells based on the DCI,

wherein the DCI includes a field of precoding information and number of layers for first cells belonging to a first group from among the different cells,

wherein each PUSCH of the first cells is transmitted based on a transmit precoding matrix indicator (TPMI) for each of the first cells, and the TPMI for each of the first cells is determined based on the field of the precoding information and number of layers,

wherein one field of second precoding information and number of layers for each of the first cells is configured for DCI for scheduling a PUSCH within one cell, and

wherein bits in the field of the precoding information and number of layers are determined based on a maximum value from among the bits in the configured field of the second precoding information and number of layers.

13. A computer-readable non-volatile storage medium including at least one computer program for causing at least one processor to perform an operation comprising:

receiving downlink control information (DCI) for scheduling physical downlink shared channels (PUSCHs) on different cells; and

transmitting the PUSCHs on the different cells based on the DCI,

wherein the DCI includes a field of precoding information and number of layers for first cells belonging to a first group from among the different cells,

wherein each PUSCH of the first cells is transmitted based on a transmit precoding matrix indicator (TPMI) for each of the first cells, and the TPMI for each of the first cells is determined based on the field of the precoding information and number of layers,

wherein one field of second precoding information and number of layers for each of the first cells is configured for DCI for scheduling a PUSCH within one cell, and

wherein bits in the field of the precoding information and number of layers are determined based on a maximum value from among the bits in the configured field of the second precoding information and number of layers.

14. A method of receiving a signal by a base station (BS) in a wireless communication system, the method comprising:

transmitting downlink control information (DCI) for scheduling physical downlink shared channels (PUSCHs) on different cells; and

receiving the PUSCHs on the different cells based on the DCI,

wherein the DCI includes a field of precoding information and number of layers for first cells belonging to a first group from among the different cells,

wherein each PUSCH of the first cells is transmitted based on a transmit precoding matrix indicator (TPMI) for each of the first cells, and the TPMI for each of the first cells is determined based on the field of the precoding information and number of layers,

wherein one field of second precoding information and number of layers for each of the first cells is configured for DCI for scheduling a PUSCH within one cell, and

wherein bits in the field of the precoding information and number of layers are determined based on a maximum value from among the bits in the configured field of the second precoding information and number of layers.

15. A base station (BS) for transmitting a signal in a wireless communication system, the BS comprising:

at least one transceiver;
at least one processor; and
at least one memory operatively connected to the at least one processor and configured to store instructions that when executed cause the at least one processor to perform a specific operation including:

transmitting downlink control information (DCI) for scheduling physical downlink shared channels (PUSCHs) on different cells; and
receiving the PUSCHs on the different cells based on the DCI,
wherein the DCI includes a field of precoding information and number of layers for first cells belonging to a first group from among the different cells,
wherein each PUSCH of the first cells is transmitted based on a transmit precoding matrix indicator (TPMI) for each of the first cells, and the TPMI for each of the first cells is determined based on the field of the precoding information and number of layers,
wherein one field of second precoding information and number of layers for each of the first cells is configured for DCI for scheduling a PUSCH within one cell, and
wherein bits in the field of the precoding information and number of layers are determined based on a maximum value from among the bits in the configured field of the second precoding information and number of layers.

【Fig. 1】

【Fig. 2】

【Fig. 3】

【Fig. 4】

| Receive DCI for scheduling PDSCHs on different cells | S401 |

| Receive PDSCHs on different cells based on DCI | S403 |

【Fig. 5】

| Transmit DCI for scheduling PDSCHs on different cells | S501 |

| Transmit PDSCHs on different cells based on DCI | S503 |

【Fig. 6】

Receive DCI for scheduling PUSCHs
on different cells — S601

↓

Transmit PUSCHs on different cells
based on DCI — S603

【Fig. 7】

Transmit DCI for scheduling PUSCHs
on different cells — S701

↓

Receive PUSCHs on different cells based on DCI — S703

【Fig. 8】

1

【Fig. 9】

【Fig. 10】

Device (100, 200)

【Fig. 11】

<div align="center">

**INTERNATIONAL SEARCH REPORT**

</div>

| | International application No. |
|---|---|
| | **PCT/KR2023/005757** |

**A.      CLASSIFICATION OF SUBJECT MATTER**

**H04W 72/232**(2023.01)i; **H04W 72/231**(2023.01)i; **H04W 72/12**(2009.01)i; **H04L 1/00**(2006.01)i; **H04L 5/00**(2006.01)i; **H04B 7/0413**(2017.01)i

According to International Patent Classification (IPC) or to both national classification and IPC

**B.      FIELDS SEARCHED**

Minimum documentation searched (classification system followed by classification symbols)

H04W 72/232(2023.01); H04B 7/0456(2017.01); H04B 7/06(2006.01); H04L 1/18(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, multi-cell, DCI, 그룹(group), TPMI(transmit precoding matrix indicator), precoding information and number of layers, antenna port, codebook based, full power, transform precoder, maxRank, codebookSubset, SRS resource set, highest, lowest

**C.      DOCUMENTS CONSIDERED TO BE RELEVANT**

| Category* | Citation of document, with indication, where appropriate, of the relevant passages | Relevant to claim No. |
|---|---|---|
| Y | KR 10-2021-0109628 A (VIVO MOBILE COMMUNICATION CO., LTD.) 06 September 2021 (2021-09-06) See paragraphs [0052]-[0199]. | 1-4,9-15 |
| A | | 5-8 |
| Y | NEC. Discussion on remaining issues for multi-TRP deployment. R1-2203674, 3GPP TSG RAN WG1 #109-e, e-Meeting. 25 April 2022. See section 2. | 1-4,9-15 |
| Y | WO 2021-151394 A1 (GUANGDONG OPPO MOBILE TELECOMMUNICATIONS CORP., LTD.) 05 August 2021 (2021-08-05) See claims 22-23. | 9-10 |
| A | WO 2021-221476 A1 (LG ELECTRONICS INC.) 04 November 2021 (2021-11-04) See paragraphs [0333]-[0504]; and figures 13-18. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/005757** |

### C. DOCUMENTS CONSIDERED TO BE RELEVANT

| Category* | Citation of document, with indication, where appropriate, of the relevant passages | Relevant to claim No. |
|---|---|---|
| A | WO 2021-203285 A1 (APPLE INC.) 14 October 2021 (2021-10-14)<br>    See paragraphs [0029]-[0082]. | 1-15 |

Form PCT/ISA/210 (second sheet) (July 2022)

INTERNATIONAL SEARCH REPORT
Information on patent family members

International application No.

**PCT/KR2023/005757**

| Patent document cited in search report | | | Publication date (day/month/year) | Patent family member(s) | | | Publication date (day/month/year) |
|---|---|---|---|---|---|---|---|
| KR | 10-2021-0109628 | A | 06 September 2021 | CN | 111278120 | A | 12 June 2020 |
| | | | | CN | 111278120 | B | 19 July 2022 |
| | | | | CN | 115190631 | A | 14 October 2022 |
| | | | | EP | 3911075 | A1 | 17 November 2021 |
| | | | | JP | 2022-518403 | A | 15 March 2022 |
| | | | | JP | 7230217 | B2 | 28 February 2023 |
| | | | | SG | 11202107582 | A | 30 August 2021 |
| | | | | US | 2021-0336664 | A1 | 28 October 2021 |
| | | | | WO | 2020-143526 | A1 | 16 July 2020 |
| WO | 2021-151394 | A1 | 05 August 2021 | None | | | |
| WO | 2021-221476 | A1 | 04 November 2021 | CN | 115485983 | A | 16 December 2022 |
| | | | | EP | 4113854 | A1 | 04 January 2023 |
| | | | | JP | 2023-522649 | A | 31 May 2023 |
| | | | | KR | 10-2022-0146580 | A | 01 November 2022 |
| | | | | KR | 10-2541191 | B1 | 13 June 2023 |
| | | | | US | 2023-0061346 | A1 | 02 March 2023 |
| WO | 2021-203285 | A1 | 14 October 2021 | CN | 115362732 | A | 18 November 2022 |
| | | | | EP | 4111778 | A1 | 04 January 2023 |
| | | | | JP | 2023-520585 | A | 17 May 2023 |
| | | | | KR | 10-2022-0151661 | A | 15 November 2022 |
| | | | | US | 2023-0029514 | A1 | 02 February 2023 |

Form PCT/ISA/210 (patent family annex) (July 2022)